# EUROPEAN PATENT SPECIFICATION

(11) **EP 3 604 347 B1**
(45) Date of publication and mention of the grant of the patent: **04.06.2025**
(21) Application number: 18777858.4
(22) Date of filing: 28.03.2018
(51) Int. Cl.: C08F 2/18, C08F 2/44, C08J 3/12, C09K 19/38

(54) **PRODUCTION METHOD FOR CHOLESTERIC LIQUID CRYSTAL RESIN FINE PARTICLES**
HERSTELLUNGSVERFAHREN FÜR FEINPARTIKEL AUS CHOLESTERISCHEM FLÜSSIGKRISTALLHARZ
PROCÉDÉ DE PRODUCTION DE PARTICULES FINES DE RÉSINE À CRISTAUX LIQUIDES CHOLESTÉRIQUES

(30) Priority: 31.03.2017 JP 2017072426
(43) Date of publication of application: 05.02.2020
(73) Proprietor: Zeon Corporation, Tokyo 100-8246 (JP)
(72) Inventor: ONO, Yusuke, Tokyo 100-8246 (JP)
(74) Representative: Kraus & Lederer PartGmbB
(86) International application number: PCT/JP2018/012951
(87) International publication number: WO 2018/181562

(56) References cited:
- JP-A- 2002 201 222
- JP-A- 2002 226 506
- JP-A- 2005 112 945
- JP-A- H06 211 907
- JP-A- H10 221 885
- JP-A- H11 268 912

## Description

### Technical field

The present disclosure relates to a method for producing cholesteric liquid crystal resin fine particles.

### Background Art

Liquid crystal resins that have cholesteric regularity (hereinafter sometimes referred to as "cholesteric liquid crystal resins") have the characteristics of reflecting circularly polarized light in a rotational direction that is coincident with the helical rotational direction of the cholesteric regularity (hereinafter, the characteristics will be referred to as "selective reflection characteristics").

The wavelength band in which the selective reflection characteristics are exhibited depends on the period of the cholesteric regularity. The distribution width of the periodicity of the cholesteric regularity is made broader, thereby making it possible to make the width of the wavelength band in which the selective reflection characteristics are exhibited (hereinafter referred to as a "selective reflection band") broader.

In recent years, novel materials have been actively developed which utilizes, for example, the above-mentioned properties of cholesteric liquid crystal resins.

For example, Patent Literature 1 discloses a method for producing polymer liquid crystal spherical fine particles, which includes the steps of: radially orienting cholesteric liquid crystals having ethylenic unsaturated double bonds from a central part, and adjusting an inter-helix distance, such that an average particle diameter of particles after polymerization is 5 micrometers or less; and photopolymerizing the oriented and adjusted liquid crystal compound to fix the inter-helix distance with a hue to be developed. The literature describes the polymer liquid crystal spherical fine particles which achieve color development by selective reflection in all directions because of the shapes of the fine particles, also with a narrow selective reflection band, and high color development intensity.

In addition, Patent Literature 2 discloses an identification medium including a light reflection layer that is capable of reflecting one of right circularly polarized light and left circularly polarized light in at least a part of a visible light range and transmitting the other circularly polarized light. The literature describes the light reflection layer including flakes capable of reflecting one of right circularly polarized light and left circularly polarized light in at least a part of the visible light range and transmitting the other circularly polarized light, where the flakes are crushed products of a resin layer that has cholesteric regularity.

On the other hand, if a circularly polarized light separating sheet can be formed which includes a cholesteric liquid crystal resin with a selective reflection band in the wavelength range of near-infrared light, it becomes possible to reflect only circularly polarized light of incident infrared light in a specific direction. Conventionally, various chiral agents have been studied in order to form cholesteric liquid crystal resins with selective reflection bands in the wavelength range of visible light.

For example, Patent Literature 3 discloses a polymer bead including a linear or cross-linked side chain type cholesteric liquid crystal polymer that has a helical twist structure, wherein the polymer bead has an average diameter of 1 µm or more 20 µm or less. The literature describes the polymer bead which has selective reflection characteristics, and which can be obtained by suspension polymerization of droplets containing a polymerizable chiral mesogenic liquid crystal material.

### Citation List

### Patent Literature

Patent Literature 1: Japanese Patent Application Laid-Open (JP-A) No. 2005-112945
Patent Literature 2: JP-A No. 2014-174471
Patent Literature 3: JP-A No. 2002-201222

### Summary of Invention

### Technical Problem

Patent Literature 1 describes the use of an aqueous solution of polyvinyl alcohol as a dispersant in the production of polymer liquid crystal spherical fine particles. In addition, Patent Literature 3 describes the use of an aqueous solution of gum arabic as a dispersant in the production of the polymer bead. However, the dispersants of the organic polymers are not suitable for methods for producing liquid crystal fine particles, for reasons such as degradation of operability due to thickening, unstable dispersibility at high temperature, and difficulty with easy and complete removal in the step of removing the dispersant.

On the other hand, Patent Literature 2 describes the use of the flakes of crushed resin, but it is difficult to finely control the particle diameter and particle diameter distribution of such a crushed product.

An object of the present disclosure is to provide a method for producing cholesteric liquid crystal resin fine particles.

### Solution to Problem

The inventor has focused on the use of an inorganic colloid in a method of obtaining resin fine particles by suspension polymerization. From this finding, the inventor has found that the physical properties of the liquid crystal resin fine particles obtained can be controlled to be uniform by the use of a dispersant different from conventional dispersants.

That is, a production method of the present disclosure is a method for producing cholesteric liquid crystal resin fine particles,
wherein a volume average particle diameter of the cholesteric liquid crystal resin fine particles is in a range of 1 µm or more and 30 µm or less,
wherein the production method comprises a fine particle forming step of forming droplets comprising a cholesteric liquid crystal compound into fine particles by shearing a cholesteric liquid crystal mixture comprising a cholesteric liquid crystal composition comprising the cholesteric liquid crystal compound and an organic solvent, an inorganic colloid, and an aqueous medium by a disperser,
wherein the production method further comprises a polymerization step of producing the cholesteric liquid crystal resin fine particles by, after the fine particle forming step, increasing a temperature of the cholesteric liquid crystal mixture to a coloring temperature range of the cholesteric liquid crystal compound and subjecting the cholesteric liquid crystal mixture to at least one polymerization process selected from the group consisting of photopolymerization and thermal polymerization, and
wherein the production method further comprises a stripping step of removing, after the fine particle forming step and before the polymerization step, the organic solvent from the cholesteric liquid crystal mixture by a stripping treatment.

In the present disclosure, a mass of the cholesteric liquid crystal compound may be in a range of 5 parts by mass or more and 60 parts by mass or less, when a total mass of the inorganic colloid and the aqueous medium is determined as 100 parts by mass.

In the present disclosure, the production method may further comprise a removing step of removing, after the polymerization step, the inorganic colloid from a polymerization reaction mixture containing the cholesteric liquid crystal resin.

### Advantageous Effects of Invention

According to the present disclosure as described above, cholesteric liquid crystal resin fine particles can be provided easily and efficiently by forming droplets containing a cholesteric liquid crystal compound into fine particles with the use of an inorganic colloid.

### Description of Embodiments

The production method according to the present disclosure is a method for producing cholesteric liquid crystal resin fine particles, wherein a volume average particle diameter of the cholesteric liquid crystal resin fine particles is in a range of 1 µm or more 30 µm or less, wherein the production method comprises a fine particle forming step of forming droplets comprising a cholesteric liquid crystal compound into fine particles by shearing a cholesteric liquid crystal mixture comprising a cholesteric liquid crystal composition comprising the cholesteric liquid crystal compound and an organic solvent, an inorganic colloid, and an aqueous medium by a disperser,
wherein the production method further comprises a polymerization step of producing the cholesteric liquid crystal resin fine particles by, after the fine particle forming step, increasing a temperature of the cholesteric liquid crystal mixture to a coloring temperature range of the cholesteric liquid crystal compound and subjecting the cholesteric liquid crystal mixture to at least one polymerization process selected from the group consisting of photopolymerization and thermal polymerization, and
wherein the production method further comprises a stripping step of removing, after the fine particle forming step and before the polymerization step, the organic solvent from the cholesteric liquid crystal mixture by a stripping treatment.

The cholesteric liquid crystal resin fine particles obtained according to the present disclosure can be produced by a wet method in which particles are formed in a liquid such as an aqueous medium.

According to the present disclosure, an inorganic colloid is used as a dispersant, and preferably, a colloid of a poorly water-soluble metal compound is used which is soluble in acid.

In the production method according to the present disclosure, it is preferable to carry out a removing step of removing the inorganic colloid from a polymerization reaction mixture (a mixture containing cholesteric liquid crystal resin fine particles, obtained after the polymerization step described later). Preferably, an acid washing is carried out in which an acid is added to the polymerization reaction mixture to dissolve the inorganic colloid. In this acid washing, the pH of the polymerization reaction mixture is adjusted to less than 6.5 by the addition of an acid to carry out the acid washing. Then, it is preferable to wash the filtered cholesteric liquid crystal resin fine particles with water, and after filtration, dry the wet cholesteric liquid crystal resin fine particles.

The present production method includes the fine particle forming step, and a cholesteric liquid crystal composition preparation step and an inorganic colloidal water dispersion preparation step may be performed before the fine particle forming step. In addition, after the fine particle forming step, a stripping step, a polymerization step, and optionally a removing step are carried out.

Therefore, the cholesteric liquid crystal composition preparation step, the inorganic colloidal water dispersion preparation step, the fine particle forming step, the stripping step, the polymerization step, the removing step, and other step will be described below in order, and finally, the physical properties of the cholesteric liquid crystal resin fine particles obtained will be described.

### 1. Cholesteric Liquid Crystal Composition Preparation Step

First, a cholesteric liquid crystal composition is prepared. The cholesteric liquid crystal composition is a composition containing a cholesteric liquid crystal compound and, if necessary, materials such as a polymerization initiator and an organic solvent.

### (1) Cholesteric Liquid Crystal Compound

Examples of the cholesteric liquid crystal compound include a polymerizable liquid crystal compound (iw) described below, a compound (i) described below, and other compounds described below. These compounds will be described in order.

### A. Polymerizable Liquid Crystal Compound (iw)

The polymerizable liquid crystal compound (iw) is a compound represented by the following formula (Iw). The polymerizable liquid crystal compound (iw) is neither a polymerizable compound (iiw) described later nor a polymerizable chiral compound.

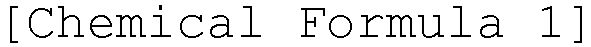

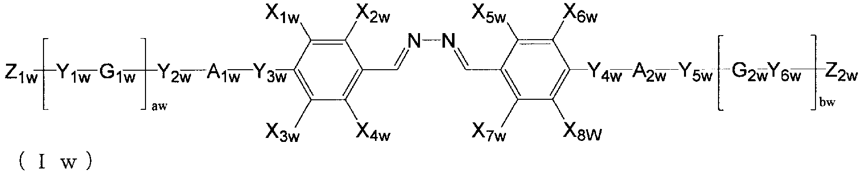

In the formula (Iw), Y_{1w} to Y_{6w} each independently represent a single bond, -O-, -S-, -O-C(=O)-, -C(=O)-O-, - O-C(=O)-O-, -NR^{1w}-C(=O)-, -C(=O)-NR^{1w}-, -O-C(=O)-NR^{1w}-, - NR^{1w}-C(=O)-O-, -NR^{1w}-C(=O)-NR^{1w}-, -O-NR^{1w}-, or -NR^{1w}-O- . R^{1w} herein represents a hydrogen atom or an alkyl group having 1 to 6 carbon atoms. R^{1w} preferably represents a hydrogen atom or a methyl group.

Particularly preferred as the combination of Y is, from the viewpoint of ease of synthesis and producing the desired advantageous effect of the present disclosure in a more favorable manner, the combination of Y_{1w} and Y_{3w} representing -C(= O)-O-, Y_{4w} and Y_{6w} representing -O-C(= O)-, and Y_{2w} and Y_{5w} representing -O-, or the combination of Y_{1w} to Y_{3w} representing -C(=O)-O- and Y_{4w} to Y_{6w} representing -O-C(= O)-.

G_{1w} and G_{2w} each independently represent a divalent aliphatic group having 1 to 20 carbon atoms, preferably a divalent aliphatic group having 1 to 12 carbon atoms, which may have a substituent.

As the divalent aliphatic group having 1 to 20 carbon atoms for G_{1w} and G_{2w}, a chain aliphatic group is preferred, such as an alkylene group having 1 to 20 carbon atoms or an alkenylene group having 2 to 20 carbon atoms.

From the viewpoint of producing the desired advantageous effect of the present disclosure in a more favorable manner, alkylene groups are preferred, such as ethylene group, butylene group, hexylene group, and octylene group.

Examples of the substituent of the aliphatic group for G_{1w} and G_{2w} include a halogen atom and alkoxy groups having 1 to 6 carbon atoms. As the halogen atom, a fluorine atom is preferred, and as the alkoxy group, a methoxy group and an ethoxy group are preferred.

In addition, the aliphatic group may contain -O-, -S-, -O-C(=O)-, -C(=O)-O-, -O-C(=O)-O-, -NR^{2w}-C(=O)-, -C(=O)-NR^{2w}-, -NR^{2w}-, or -C(=O)- interposed therein (except the case where two or more adjacent -O- groups and two or more adjacent -S- groups are respectively interposed). R^{2w} herein represents a hydrogen atom or an alkyl group having 1 to 6 carbon atoms. R^{2w} preferably represents a hydrogen atom or a methyl group.

Z_{1w} and Z_{2w} each independently represent an alkenyl group having 2 to 10 carbon atoms, which may be substituted with a halogen atom.

Specific examples of the alkenyl group having 2 to 10 carbon atoms for Z_{1w} and Z_{2w} include CH₂=CH-, CH₂=C(CH₃)-, CH₂=CH-CH₂-, CH₃-CH=CH-, CH₂=CH-CH₂-CH₂-, CH₂=C(CH₃)-CH₂-CH₂-, (CH₃)₂C=CH-CH₂-, (CH₃)₂C=CH-CH₂-CH₂-, CH₂=C(Cl)-, CH₂=C(CH₃)-CH₂-, and CH₃-CH=CH-CH₂-.

The carbon number of the alkenyl group is preferably 2 to 6. As the halogen atom which serves as a substituent of the alkenyl group for Z_{1w} and Z_{2w}, a chlorine atom is preferred.

Above all, Z_{1w} and Z_{2w} more preferably represent, from the viewpoint of producing the desired advantageous effect of the present disclosure, CH₂=CH-, CH₂=CH(CH₃)-, CH₂=C(Cl)-, CH₂=CH-CH₂-, CH₂=C(CH₃)-CH₂-, or CH₂=C(CH₃)-CH₂-CH₂-.

X_{1w} to X_{8w} each independently represent a hydrogen atom, a halogen atom, an alkyl group having 1 to 10 carbon atoms, which may have a substituent, a cyano group, a nitro group, -OR^{3w}, -O-C(=O)-R^{3w}, -C(=O)-OR^{3w}, -O-C(=O)-OR^{3w}, -NR^{4w}-C(=O)-R^{3w}, -C(=O)-NR^{3w}R^{4w}, or -O-C(=O)-NR^{3w}R^{4w}. In a case where X_{1w} to X_{8w} each represent an alkyl group having a substituent, examples of the substituents include a halogen atom, a hydroxyl group, a methyl group, and an ethyl group. R^{3w} and R^{4w} herein represent a hydrogen atom or an alkyl group having 1 to 10 carbon atoms, which may have a substituent, and in the case of the alkyl group, the alkyl group may contain -O-, -S-, -O-C(=O)-, -C(=O)-O-, -O-C(=O)-O-, -NR^{5w}-C(=O)-, -C(=O)-NR^{5w}-, -NR^{5w}-, or -C(=O)- interposed therein (except the case where two or more adjacent -O-groups and two or more adjacent -S- groups are respectively interposed). R^{5w} herein represents a hydrogen atom or an alkyl group having 1 to 6 carbon atoms. In a case where R^{3w} and R^{4w} each represent an alkyl group having a substituent, examples of the substituents each independently include a halogen atom, a hydroxyl group, a methyl group, and an ethyl group.

From the viewpoint of ease of access to raw materials, preferably, (1) X_{1w} to X_{8w} all represent hydrogen atoms, (2) X_{1w} to X_{5w} and X_{7w} all represent hydrogen atoms, and X_{6w} and X_{8w} each represent -OCH₃, -OCH₂CH₃, or -CH₃ (3) X_{1w} to X_{5w}, X_{7w}, and X_{8w} all represent hydrogen atoms, and X_{6w} represents - C(=O)-OR^{3w}, -OCH₃, -OCH₂CH₃, -CH₃, -CH₂CH₃, -CH₂CH₂CH₃, or a fluorine atom, or (4) X_{1w} to X_{4w} and X_{6w} to X_{8w} all represent hydrogen atoms, and X_{5w} represents -C(=O)-O-R^{3w}, -OCH₃, - OCH₂CH₃, -CH₃, -CH₂CH₃, -CH₂CH₂CH₃, or a fluorine atom.

In addition, in the formula (Iw), specific examples of the groups represented by the formula: -Y_{2w}-(G_{1w}-Y_{1w})aw-Z_{1w} and the formula: -Y_{5w}-(G_{2w}-Y_{6w})bw-Z_{2w}, respectively bonded to A_{1w} and A_{2w} include the following groups. It is to be noted that the aw and bw mentioned above respectively represent the repeated numbers of (G_{1w}-Y_{1w}) units and (G_{2w}-Y_{6w}) units, and aw and bw each independently represent 0 or 1. As a particularly preferred combination as aw and bw, both aw and bw are 1 from the viewpoint of ease of synthesis and producing the desired advantageous effect of the present disclosure in a more favorable manner.

The following refers to a legend with aw or bw of 1, that is, the structure represented by the following formula (Cw).

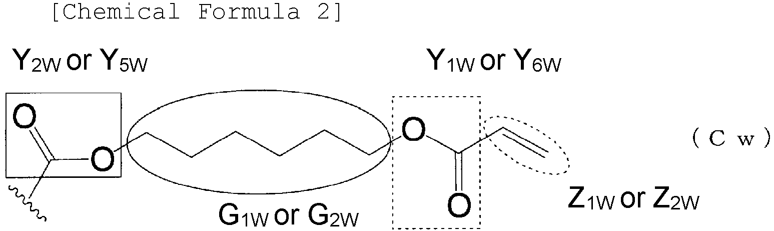

In the formula, Y_{2w} or Y_{5w} corresponds to -C(=O)-O-, G_{1w} or G_{2w} corresponds to a hexylene group, Y_{1w} or Y_{6w} corresponds to -O-C(=O)-, and Z_{1w} or Z_{2w} corresponds to a vinyl group.

The following refers to a legend with aw or bw of 0, that is, the structure represented by the following formula (Dw) .

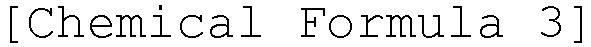

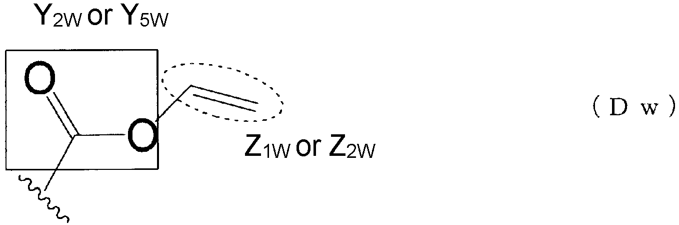

In the formula, Y_{2w} or Y_{5w} corresponds to -C(=O)-O-, and Z_{1w} or Z_{2w} corresponds to a vinyl group.

A_{1w} and A_{2w} each independently represent a divalent organic group A having 1 to 30 carbon atoms. The carbon number of the organic group A is preferably 6 to 20. The organic group A for A_{1w} and A_{2w} is not particularly limited, but is preferably a group containing an aromatic ring.

The Δn value of the polymerizable liquid crystal compound (iw) is preferably 0.05 or more, more preferably 0.20 or more. Having such a high Δn value makes it possible to provide a cured product of droplets, which has high optical performance (for example, a selectively reflecting function). The upper limit of Δn is not particularly limited, but may be adjusted to, for example, 0.40, preferably 0.35.

The polymerizable liquid crystal compound (iw) can be produced, based on a known method described in the literature such as WO2009/041512.

B. Polymerizable Liquid Crystal Compound that may be Used in combination with Polymerizable Liquid Crystal Compound (iw)

The polymerizable liquid crystal compound (iw) may be used in combination with other polymerizable liquid crystal compounds. Examples of the polymerizable liquid crystal compound which may be used in combination with the polymerizable liquid crystal compound (iw) include known polymerizable liquid crystal compounds such as described in JP-A No. H11-130729, JP-A No. H8-104870, JP-A No. 2005-309255, JP-A No. 2005-263789. JP-A No. 2002-533742, JP-A No. 2002-308832, JP-A No. 2002-265421, JP-A No. S62-070406, and JP-A No. H11-100575.

One of the polymerizable liquid crystal compound (iw) and other polymerizable liquid crystal compounds described above may be used alone, or two or more thereof may be used in combination at any ratio. However, in the case of using the polymerizable liquid crystal compound (iw) and other polymerizable liquid crystal compound, the content of the polymerizable liquid crystal compound other than the polymerizable liquid crystal compound (iw) is preferably 50% by mass or less, more preferably 30% by mass or less in the total amount of the polymerizable liquid crystal compounds.

### C. Polymerizable Compound (iiw)

In a case where the cholesteric liquid crystal composition contains the polymerizable liquid crystal compound (iw), the cholesteric liquid crystal composition may contain a polymerizable compound other than the polymerizable liquid crystal compound. Preferred examples of the polymerizable compound include achiral compounds represented by the following formula (IIw). Hereinafter, this compound may be referred to as a polymerizable compound (iiw).

Z^{3w}-MG-O(CH₂)n_{1w}-Y^{11w}-Z^{4w} (IIw)

In the formula (IIw), Z^{3w} represents a group selected from the group consisting of a hydrogen atom, alkyl groups having 1 to 2 carbon atoms, which may have a substituent, halogen atoms, a hydroxyl group, a carboxyl group, amino groups, and a cyano group. In a case where Z^{3w} represents an alkyl group having a substituent, examples of the substituent include halogen atoms. Z^{3w} preferably represents a cyano group.

MG represents a mesogenic group selected from the group consisting of 4,4'-biphenylene, 4,4'-bicyclohexylene, 2,6-naphthylene and 4,4'-benzaldehyde azine groups (-C₆H₄-CH-=N-N=CH-C₆H₄-, where -C₆H₄- represents a p-phenylene group). MG preferably represents a 4,4'-biphenylene group.

n_{1w} represents an integer of 0 to 6, preferably 0 to 2.

Y^{11w} represents a group selected from the group consisting of a single bond, -O-, -S-, -CO-, -CS-, -OCO-, - CH₂-, -OCH₂-, -NHCO-, -OCOO-, -CH₂COO-, and -CH₂OCO-. Y^{11w} preferably represents -OCO-.

Z^{4w} represents an alkenyl group having 2 to 10 carbon atoms, which may be substituted with a halogen atom. Z^{4w} preferably represents CH₂=CH-.

The Δn of the polymerizable compound (iiw) is preferably 0.18 or more, and more preferably, can be adjusted to 0.22 or more. Having such a high Δn value makes it possible to improve Δn as a cholesteric liquid crystal material, and makes it possible to prepare a cured product of droplets, which has a broadband selectively reflecting function. The upper limit of Δn is not particularly limited, but can be adjusted to, for example, 0.35, preferably 0.30.

The method for producing the polymerizable compound (iiw) is not particularly limited, and the polymerizable compound (iiw) can be synthesized by methods known in the art, for example, the methods described in JP-A No. H62-70406 and JP-A No. H11-100575.

### D. Polymerizable Chiral Compound

In a case where the cholesteric liquid crystal composition contains the polymerizable liquid crystal compound (iw), the cholesteric liquid crystal composition may further contain a polymerizable chiral compound. As the polymerizable chiral compound, a compound may be appropriately selected and used which contains a chiral carbon atom in the molecule, is polymerizable with the polymerizable liquid crystal compound, and does not disturb the orientation of the polymerizable liquid crystal compound. The polymerizable liquid crystal compound (iw) described above may exhibit a cholesteric phase by mixing with the polymerizable chiral compound.

The "polymerization" herein means a chemical reaction in a broad sense including crosslinking reactions in addition to typical polymerization reactions.

In the cholesteric liquid crystal composition, the one polymerizable chiral compound may be used alone, or two or more polymerizable chiral compounds may be used in combination.

Examples of the polymerizable chiral compound include, in addition to commercially available products (for example, "LC756" manufactured by BASF Corp.), known compounds as described in JP-A No. H11-193287 and JP-A No. 2003-137887.

### E. Compound (i)

The compound (i) is a compound represented by the following formula (I), which exhibits liquid crystallinity.

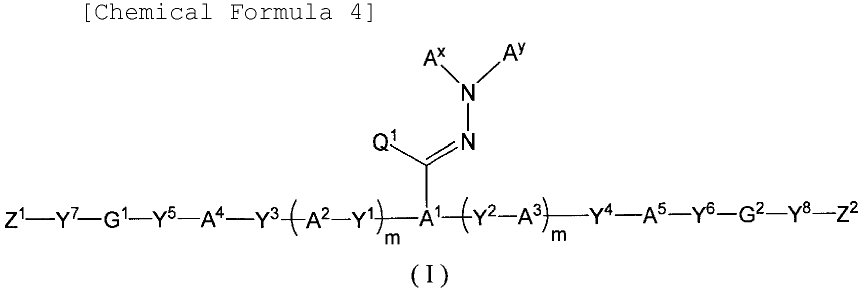

In the formula (I), Y¹ to Y⁸ each independently represent a single chemical bond, -O-, -S-, -O-C(=O)-, - C(=O)-O-, -O-C(=O)-O-, -NR¹-C(=O)-, -C(=O)-NR¹-, -O-C(=O)-NR¹-, -NR¹-C(=O)-O-, -NR¹-C(=O)-NR¹-, -O-NR¹-, or -NR¹-O-.

R¹ herein represents a hydrogen atom or an alkyl group having 1 to 6 carbon atoms.

Examples of the alkyl group having 1 to 6 carbon atoms for R¹ include methyl, ethyl, n-propyl, isopropyl, n-butyl, sec-butyl, t-butyl, n-pentyl and n-hexyl groups.

As R¹, a hydrogen atom or an alkyl group having 1 to 4 carbon atoms is preferred.

In the compound (i), Y¹ to Y⁸ each independently, preferably represent a single chemical bond, -O-, -O-C(=O)-, -C(=O)-O-, or -O-C(=O)-O-.

In the formula (I), G¹ and G² each independently represent a divalent aliphatic group having 1 to 20 carbon atoms, which may have a substituent.

Examples of the divalent aliphatic group having 1 to 20 carbon atoms include divalent aliphatic groups containing a chain structure such as alkylene groups having 1 to 20 carbon atoms and alkenylene groups having 2 to 20 carbon atoms; and divalent aliphatic groups such as cycloalkanediyl groups having 3 to 20 carbon atoms, cycloalkenediyl groups having 4 to 20 carbon atoms, and divalent alicyclic condensed ring groups having 10 to 30 carbon atoms.

Examples of the substituent of the divalent aliphatic group for G¹ and G² include halogen atoms such as a fluorine atom, a chlorine atom, a bromine atom, and an iodine atom; and alkoxy groups having 1 to 6 carbon atoms, such as methoxy, ethoxy, n-propoxy, isopropoxy, n-butoxy, sec-butoxy, t-butoxy, n-pentyloxy and n-hexyloxy groups. Among the examples, a fluorine atom, a methoxy group, and an ethoxy group are preferred.

In addition, the aliphatic group may contain one or more groups of -O-, -S-, -O-C(=O)-, -C(=O)-O-, -O-C(=O)-O-, -NR²-C(=O)-, -C(=O)-NR²-, -NR²-, or -C(=O)- interposed per an aliphatic group. However, cases are excluded where two or more adjacent -O- groups or two or more adjacent -S-groups are respectively interposed. R² herein represents a hydrogen atom or an alkyl group having 1 to 6 carbon atoms, and R² is preferably a hydrogen atom or a methyl group.

As the group interposed in the aliphatic group, -O-, -O-C(= O)-, -C(=O)-O-, and -C (= O)- are preferred.

Specific examples of the aliphatic group, with these groups interposed therein, include -CH₂-CH₂-O-CH₂-CH₂-, - CH₂-CH₂-S-CH₂-CH₂-, -CH₂-CH₂-O-C(=O)-CH₂-CH₂-, -CH₂-CH₂-C(=O)-O-CH₂-CH₂-, -CH₂-CH₂-C(=O)-O-CH₂-, -CH₂-O-C(=O)-O-CH₂-CH₂-, - CH₂-CH₂-NR²-C(=O)-CH₂-CH₂-, -CH₂-CH₂-C(=O)-NR²-CH₂-, -CH₂-NR²-CH₂-CH₂-, and -CH₂-C(=O)-CH₂-.

Among these examples, from the viewpoint of producing the desired advantageous effect of the present disclosure in a more favorable manner, G¹ and G² are each independently a divalent aliphatic group containing a chain structure such as an alkylene group having 1 to 20 carbon atoms or an alkenylene group having 2 to 20 carbon atoms, more preferably an alkylene group having 1 to 12 carbon atoms, such as methylene, ethylene, trimethylene, propylene, tetramethylene, pentamethylene, hexamethylene, octamethylene and decamethylene [-(CH₂)₁₀-] groups, particularly preferably tetramethylene [-(CH₂)₄-], hexamethylene [-(CH₂)₆-], octamethylene [-(CH₂)₈-] and decamethylene [-(CH₂)₁₀-] groups.

In the formula (I), Z¹ and Z² each independently represent an alkenyl group having 2 to 10 carbon atoms, which may be substituted with a halogen atom.

The carbon number of the alkenyl group is preferably 2 to 6. Examples of the halogen atom which serves as a substituent of the alkenyl group for Z¹ and Z² include a fluorine atom, a chlorine atom, and a bromine atom, and a chlorine atom is preferred.

Specific examples of the alkenyl group having 2 to 10 carbon atoms for Z¹ and Z² include CH₂=CH-, CH₂=C(CH₃)-, CH₂=CH-CH₂-, CH₃-CH=CH-, CH₂=CH-CH₂-CH₂-, CH₂=C(CH₃)-CH₂-CH₂-, (CH₃)₂C=CH-CH₂-, (CH₃)₂C=CH-CH₂-CH₂-, CH₂=C(Cl)-, CH₂=C(CH₃)-CH₂-, and CH₃-CH=CH-CH₂-.

Among the examples, from the viewpoint of producing the desired advantageous effect of the present disclosure in a more favorable manner, Z¹ and Z² are, each independently, preferably CH₂=CH-, CH₂=C(CH₃)-, CH₂=C(Cl)-, CH₂=CH-CH₂-, CH₂=C(CH₃)-CH₂-, or CH₂=C(CH₃)-CH₂-CH₂-, more preferably CH₂=CH-, CH₂=C(CH₃)-, or CH₂=C(Cl)-, and particularly preferably CH₂=CH-.

In the formula (I), A^{x} represents an organic group having 2 to 30 carbon atoms, which contains at least one aromatic ring selected from the group consisting of aromatic hydrocarbon rings and aromatic heterocycles. The "aromatic ring" means a cyclic structure that has broadsense aromaticity in accordance with the Huckel's rule, that is, a cyclic conjugated structure having (4n + 2) π electrons, and a cyclic structure represented by, for example, thiophene, furan, benzothiazole, which exhibits aromaticity by involving the lone electron pair of a heteroatom such as sulfur, oxygen, and nitrogen in the π electron system.

The organic group having 2 to 30 carbon atoms, which contains at least one aromatic ring selected from the group consisting of aromatic hydrocarbon rings and aromatic heterocycles, for A^{x} may contain a plurality of aromatic rings, or may contain both an aromatic hydrocarbon ring and an aromatic heterocycle.

Examples of the aromatic hydrocarbon ring include benzene, naphthalene and anthracene rings. Examples of the aromatic heterocycle include monocyclic aromatic heterocycles such as pyrrole, furan, thiophene, pyridine, pyridazine, pyrimidine, pyrazine, pyrazole, imidazole, oxazole and thiazole rings; and aromatic heterocycles of condensed rings, such as benzothiazole, benzoxazole, quinoline, phthalazine, benzoimidazole, benzopyrazole, benzofuran, benzothiophene, thiazolopyridine, oxazolopyridine, thiazolopyrazine, oxazolopyrazine, thiazolopyridazine, oxazolopyridazine, thiazolopyrimidine and oxazolopyrimidine rings.

The aromatic ring of A^{x} may have a substituent. Examples of the substituent include halogen atoms such as a fluorine atom and a chlorine atom; a cyano group; alkyl groups having 1 to 6 carbon atoms, such as methyl, ethyl and propyl groups; alkenyl groups having 2 to 6 carbon atoms, such as vinyl and allyl groups; halogenated alkyl groups having 1 to 6 carbon atoms, such as a trifluoromethyl group; substituted amino groups such as a dimethylamino group; alkoxy groups having 1 to 6 carbon atoms, such as methoxy, ethoxy and isopropoxy groups; a nitro group; aryl groups such as phenyl and naphthyl groups; -C(=O)-R⁵; -C(=O)-OR⁵; and -SO₂R⁶. R⁵ herein represents an alkyl group having 1 to 20 carbon atoms, an alkenyl group having 2 to 20 carbon atoms, or a cycloalkyl group having 3 to 12 carbon atoms, and R⁶ represents, as with R⁴ described later, an alkyl group having 1 to 20 carbon atoms, an alkenyl group having 2 to 20 carbon atoms, a phenyl or a 4-methylphenyl group.

Further, the aromatic ring of A^{x} may have a plurality of identical or different substituents, and two adjacent substituents may be joined together to form a ring. The ring to be formed may be a single ring or a condensed polycyclic ring, and an unsaturated ring or a saturated ring.

Furthermore, the "carbon number" of the organic group having 2 to 30 carbon atoms for A^{x} means the total carbon number of the whole organic group, excluding the carbon atoms of the substituent (the same applies to A^{y} described later).

Examples of the organic group having 2 to 30 carbon atoms, which contains at least one aromatic ring selected from the group consisting of aromatic hydrocarbon rings and aromatic heterocycles, for A^{x}, include aromatic hydrocarbon ring groups such as benzene, naphthalene and anthracene ring groups; aromatic heterocyclic groups such as pyrrole, furan, thiophene, pyridine, pyridazine, pyrimidine, pyrazine, pyrazole, imidazole, oxazole, thiazole, benzothiazole, benzoxazole, quinoline, phthalazine, benzoimidazole, benzopyrazole, benzofuran, benzothiophene, thiazolopyridine, oxazolopyridine, thiazolopyrazine, oxazolopyrazine, thiazolopyridazine, oxazolopyridazine, thiazolopyrimidine and oxazolopyrimidine ring groups; groups containing a combination of an aromatic hydrocarbon ring and a heterocycle; alkyl groups having 3 to 30 carbon atoms, which contain at least one aromatic ring selected from the group consisting of aromatic hydrocarbon rings and aromatic heterocycles; alkenyl groups having 4 to 30 carbon atoms, which contain at least one aromatic ring selected from the group consisting of aromatic hydrocarbon rings and aromatic heterocycles; and alkynyl groups having 4 to 30 carbon atoms which contain at least one aromatic ring selected from the group consisting of aromatic hydrocarbon rings and aromatic heterocycles.

Preferred specific examples of A^{x} are shown below. However, A^{x} is not to be considered limited to the following. It is to be noted that in the following formulas, "-" represents a bond extending from any position of a ring (the same applies hereinafter).

### (A) Aromatic Hydrocarbon Ring Group

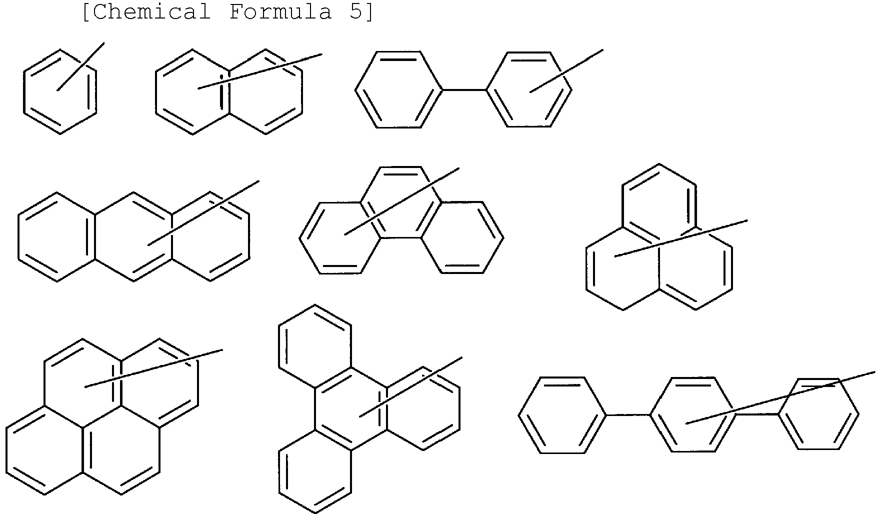

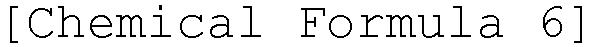

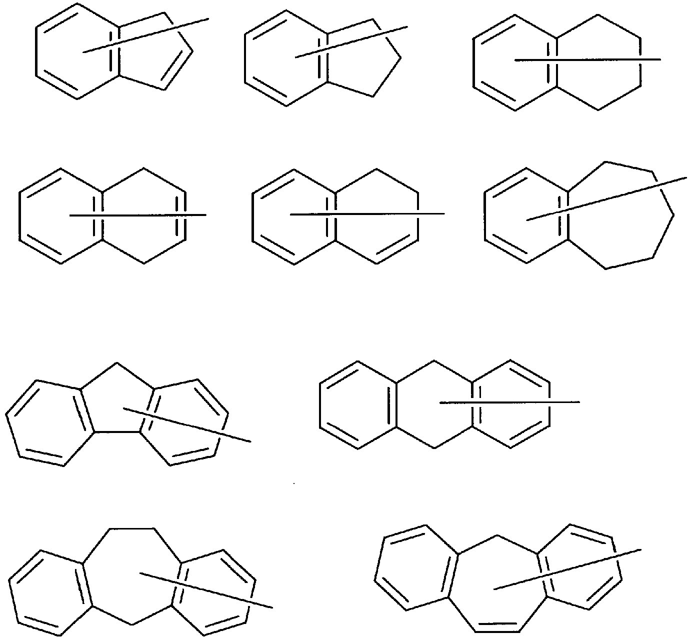

### (B) Aromatic Heterocyclic Group

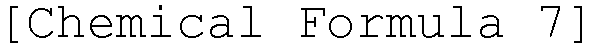

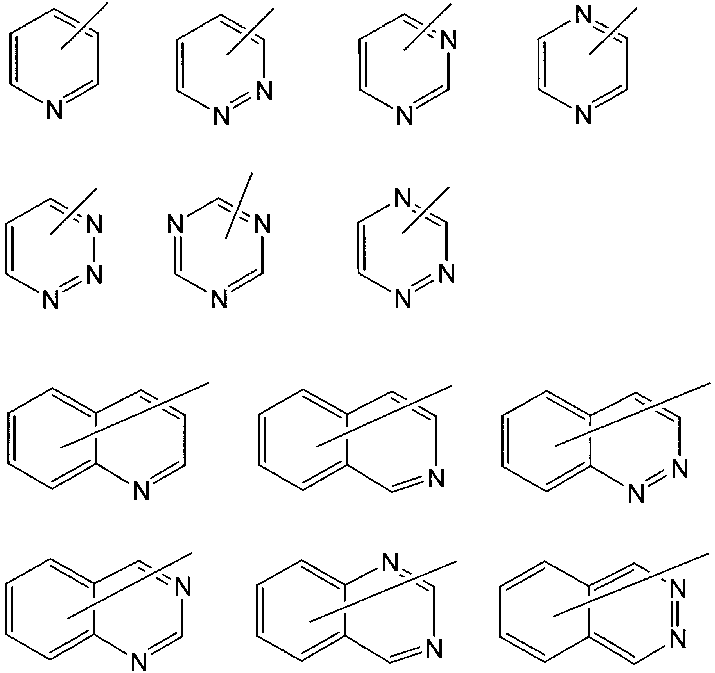

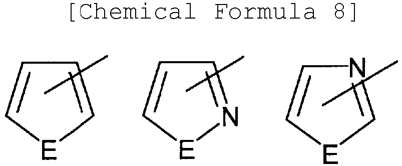

In the formula, E represents NR^{6a}, an oxygen atom, or a sulfur atom. R^{6a} herein represents a hydrogen atom; or an alkyl group having 1 to 6 carbon atoms, such as a methyl group, an ethyl group, or a propyl group.

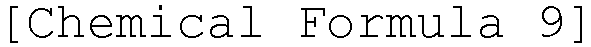

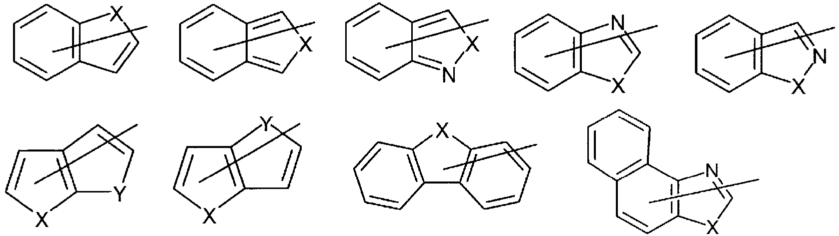

In the formula, X and Y each independently represent NR⁷, an oxygen atom, a sulfur atom, -SO-, or -SO₂-(except the case where an oxygen atom, a sulfur atom, -SO-, and - SO₂- are each adjacent to each other). R⁷ herein represents, as with R^{6a}, a hydrogen atom; or an alkyl group having 1 to 6 carbon atoms, such as a methyl group, an ethyl group, or a propyl group.

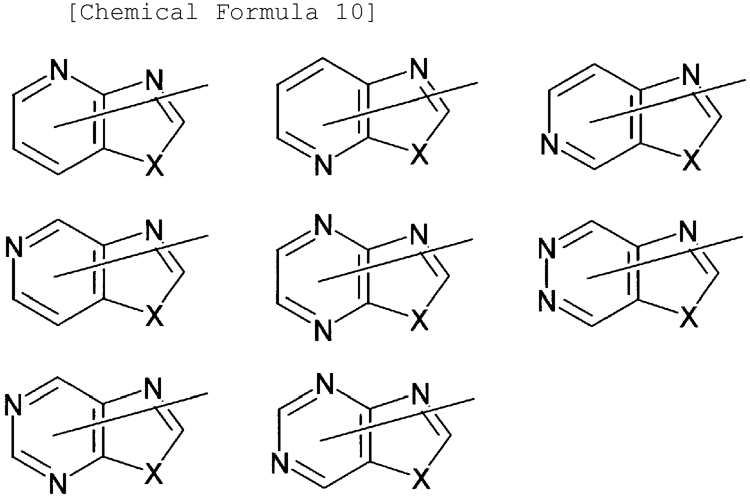

(In the formula, X represents the same meaning as described above.)

### (C) Group containing Combination of Aromatic Hydrocarbon Ring and Heterocycle

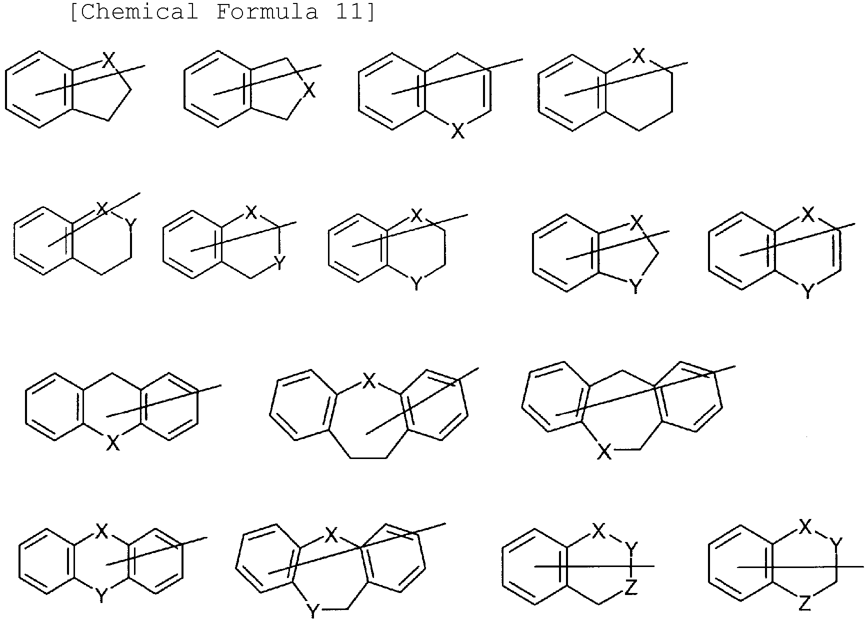

(In the formula, X and Y each independently represent the same meanings as described above. In the formula, Z represents NR⁷, an oxygen atom, a sulfur atom, -SO-, or - SO₂- (except the case where an oxygen atom, a sulfur atom, -SO-, and -SO₂-are each adjacent to each other.).)

### (D) Alkyl Group containing at least one Aromatic Ring selected from Group consisting of Aromatic Hydrocarbon Rings and Aromatic Heterocycles

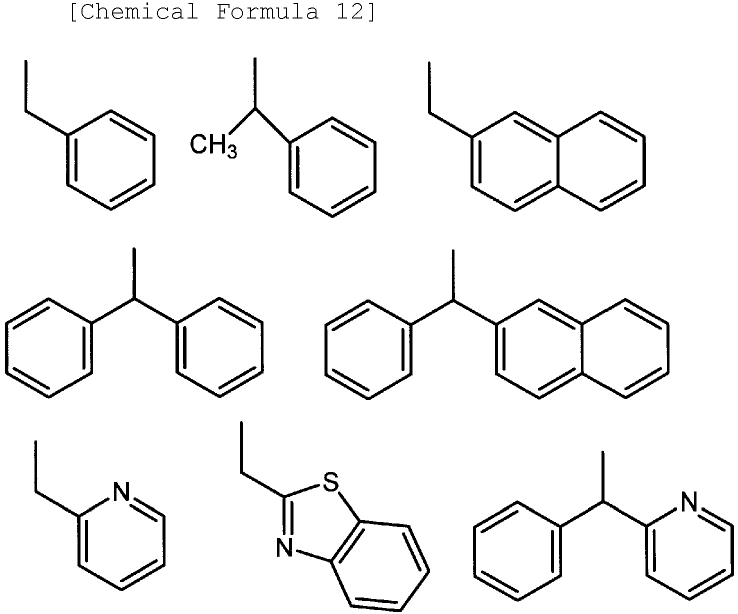

### (E) Alkenyl Group containing at least one Aromatic Ring selected from Group consisting of Aromatic Hydrocarbon Rings and Aromatic Heterocycles

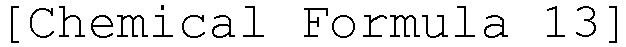

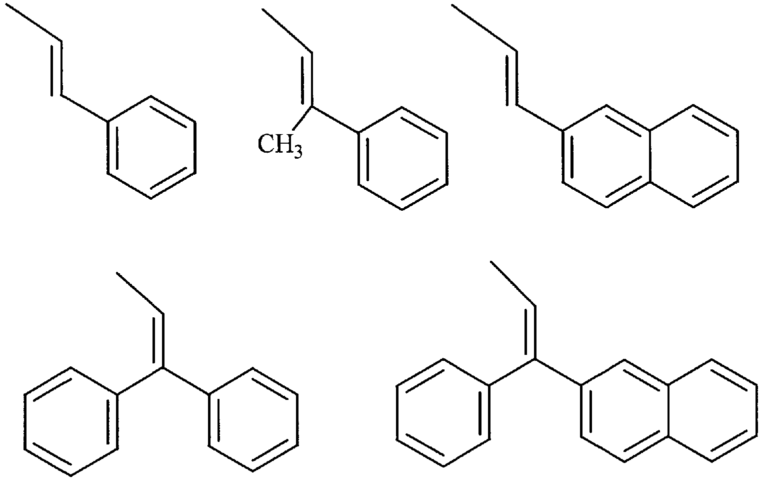

### (F) Alkynyl Group containing at least one Aromatic Ring selected from Group consisting of Aromatic Hydrocarbon Rings and Aromatic Heterocycles

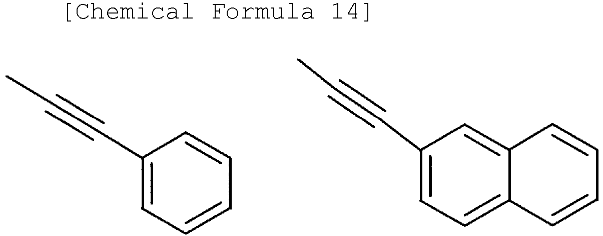

A^{x} preferably represents, among the above-mentioned examples of A^{x}, the aromatic hydrocarbon ring group having 6 to 30 carbon atoms, the aromatic heterocyclic group having 4 to 30 carbon atoms, or the group having 4 to 30 carbon atoms, which contains the combination of an aromatic hydrocarbon ring and a heterocycle, and more preferably any of the groups shown below.

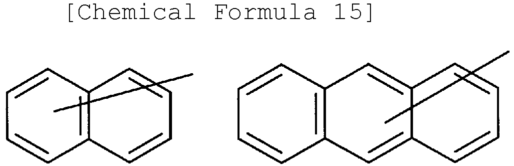

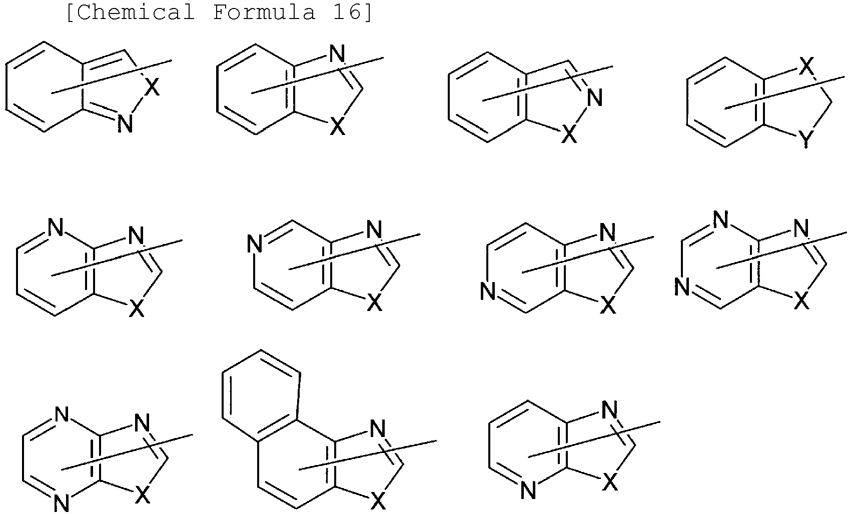

Furthermore, A^{x} further preferably represents any of the groups shown below.

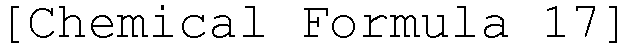

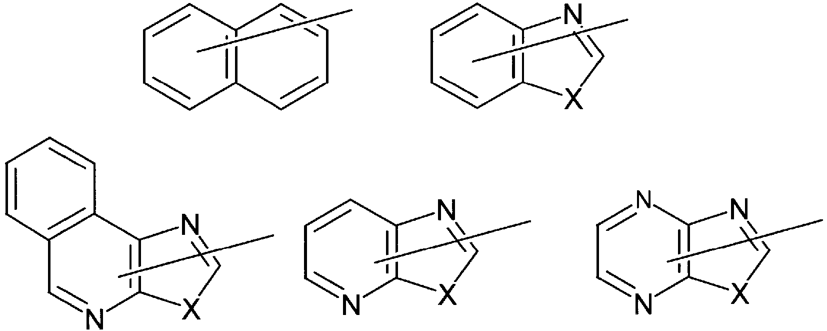

The ring of A^{x} may have a substituent. Examples of the substituent include halogen atoms such as a fluorine atom and a chlorine atom; a cyano group; alkyl groups having 1 to 6 carbon atoms, such as methyl, ethyl and propyl groups; alkenyl groups having 2 to 6 carbon atoms, such as vinyl and allyl groups; halogenated alkyl groups having 1 to 6 carbon atoms, such as a trifluoromethyl group; substituted amino groups such as a dimethylamino group; alkoxy groups having 1 to 6 carbon atoms, such as methoxy, ethoxy and isopropoxy groups; a nitro group; aryl groups such as phenyl and naphthyl groups; -C(=O)-R⁸; - C(=O)-OR⁸; and -SO₂R⁶. R⁸ herein represents an alkyl group having 1 to 6 carbon atoms, such as a methyl group or an ethyl group; or an aryl group having 6 to 14 carbon atoms, such as a phenyl group. Among the examples, the halogen atoms, the cyano group, the alkyl groups having 1 to 6 carbon atoms, and the alkoxy groups having 1 to 6 carbon atoms are preferred as the substituent.

The ring of A^{x} may have a plurality of identical or different substituents, and two adjacent substituents may be joined together to form a ring. The ring to be formed may be a single ring or a condensed polycyclic ring.

The "carbon number" of the organic group having 2 to 30 carbon atoms for A^{x} means the total carbon number of the whole organic group, excluding the carbon atoms of the substituent (the same applies to A^{y} described later).

In the formula (I), A^{y} represents a hydrogen atom, an alkyl group having 1 to 20 carbon atoms, which may have a substituent, an alkenyl group having 2 to 20 carbon atoms, which may have a substituent, and a cycloalkyl group having 3 to 12 carbon atoms, which may have a substituent, an alkynyl group having 2 to 20 carbon atoms, which may have a substituent, -C(=O)-R³, -SO₂-R⁴, -C(=S)NH-R⁹, or an organic group having 2 to 30 carbon atoms, which contains at least one aromatic ring selected from the group consisting of aromatic hydrocarbons ring and aromatic heterocycles. R³ herein represents an alkyl group having 1 to 20 carbon atoms, which may have a substituent, an alkenyl group having 2 to 20 carbon atoms, which may have a substituent, a cycloalkyl group having 3 to 12 carbon atoms, which may have a substituent, or an aromatic hydrocarbon ring group having 5 to 12 carbon atoms. R⁴ represents an alkyl group having 1 to 20 carbon atoms, an alkenyl group having 2 to 20 carbon atoms, a phenyl group, or a 4-methylphenyl group. R⁹ represents an alkyl group having 1 to 20 carbon atoms, which may have a substituent, an alkenyl group having 2 to 20 carbon atoms, which may have a substituent, a cycloalkyl group having 3 to 12 carbon atoms, which may have a substituent, or an aromatic group having 5 to 20 carbon atoms, which may have a substituent.

Examples of the alkyl group having 1 to 20 carbon atoms, of the alkyl group having 1 to 20 carbon atoms which may have a substituent, for A^{y}, include methyl, ethyl, n-propyl, isopropyl, n-butyl, isobutyl, 1-methylpentyl, 1-ethylpentyl, sec-butyl, t-butyl, n-pentyl, isopentyl, neopentyl, n-hexyl, isohexyl, n-heptyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl and n-icosyl groups. The carbon number of the alkyl group having 1 to 20 carbon atoms, which may have a substituent, is preferably 1 to 12, and further preferably 4 to 10.

Examples of the alkenyl group having 2 to 20 carbon atoms, of the alkenyl group having 2 to 20 carbon atoms, which may have a substituent, for A^{y}, include vinyl, propenyl, isopropenyl, butenyl, isobutenyl, pentenyl, hexenyl, heptenyl, octenyl, decenyl, undecenyl, dodecenyl, tridecenyl, tetradecenyl, pentadecenyl, hexadecenyl, heptadecenyl, octadecenyl, nonacenyl and icosenyl groups. The carbon number of the alkenyl group having 2 to 20 carbon atoms, which may have a substituent, is preferably 2 to 12.

Examples of the cycloalkyl group having 3 to 12 carbon atoms, of the cycloalkyl group having 3 to 12 carbon atoms, which may have a substituent, for A^{y}, include cyclopropyl, cyclobutyl, cyclopentyl, cyclohexyl and cyclooctyl groups.

Examples of the alkynyl group having 2 to 20 carbon atoms, of the alkynyl group having 2 to 20 carbon atoms, which may have a substituent, for A^{y}, include ethynyl, propynyl, 2-propynyl (propargyl), butynyl, 2-butynyl, 3-butynyl, pentynyl, 2-pentynyl, hexynyl, 5-hexynyl, heptynyl, octynyl, 2-octynyl, nonanyl, decanyl and 7-decanyl groups.

Example of the substituents of the alkyl group having 1 to 20 carbon atoms, which may have a substituent, and of the alkenyl group having 2 to 20 carbon atoms, which may have a substituent, for A^{y}, include halogen atoms such as a fluorine atom and a chlorine atom; a cyano group; substituted amino groups such as a dimethylamino group; alkoxy groups having 1 to 20 carbon atoms, such as methoxy, ethoxy, isopropoxy and butoxy groups; alkoxy groups having 1 to 12 carbon atoms, substituted with an alkoxy group having 1 to 12 carbon atoms, such as methoxymethoxy and methoxyethoxy group; a nitro group; aryl groups such as phenyl and naphthyl groups; cycloalkyl groups having 3 to 8 carbon atoms, such as cyclopropyl, cyclopentyl and cyclohexyl groups; cycloalkyloxy groups having 3 to 8 carbon atoms, such as cyclopentyloxy and cyclohexyloxy groups; cyclic ether groups having 2 to 12 carbon atoms, such as tetrahydrofuranyl, tetrahydropyranyl, dioxolanyl and dioxanyl groups; aryloxy groups having 6 to 14 carbon atoms, such as phenoxy and naphthoxy groups; fluoroalkoxy groups having 1 to 12 carbon atoms, in which at least one is substituted with a fluorine atom, such as trifluoromethyl and pentafluoroethyl groups, and -CH₂CF₃; a benzofuryl group; a benzopyranyl group; a benzodioxolyl group; a benzodioxanyl group; -C(= O)-R^{7a}; -C(=O)-OR^{7a}; - SO₂R^{8a}; -SR¹⁰; alkoxy groups having 1 to 12 carbon atoms, substituted with -SR¹⁰; and a hydroxyl group. R^{7a} and R¹⁰ herein each independently represent an alkyl group having 1 to 20 carbon atoms, an alkenyl group having 2 to 20 carbon atoms, a cycloalkyl group having 3 to 12 carbon atoms, or an aromatic hydrocarbon ring group having 6 to 12 carbon atoms. R^{8a} represents, as with R⁴, an alkyl group having 1 to 20 carbon atoms, an alkenyl group having 2 to 20 carbon atoms, a phenyl group, or a 4-methylphenyl group.

Examples of the substituent of the cycloalkyl group having 3 to 12 carbon atoms, which may have a substituent, for A^{y}, include halogen atoms such as a fluorine atom and a chlorine atom; a cyano group; substituted amino groups such as a dimethylamino group; alkyl groups having 1 to 6 carbon atoms, such as methyl, ethyl and propyl groups; alkoxy groups having 1 to 6 carbon atoms, such as methoxy, ethoxy and isopropoxy groups; a nitro group; aryl groups such as phenyl and naphthyl groups; cycloalkyl groups having 3 to 8 carbon atoms, such as cyclopropyl, cyclopentyl and cyclohexyl groups; -C(=O)-R^{7a}; -C(= O)-OR^{7a}; -SO₂R^{8a}; and a hydroxyl group. R^{7a} and R^{8a} herein represent the same meanings as described above.

Examples of the substituent of the alkynyl group having 2 to 20 carbon atoms, which may have a substituent, for A^{y} include the same substituents as the substituents of the alkyl group having 1 to 20 carbon atoms, which may have a substituent, and of the alkenyl group having 2 to 20 carbon atoms, which may have a substituent.

In the group represented by -C(=O)-R³ for A^{y}, R³ represents an alkyl group having 1 to 20 carbon atoms, which may have a substituent, an alkenyl group having 2 to 20 carbon atoms, which may have a substituent, a cycloalkyl group having 3 to 12 carbon atoms, which may have a substituent, or an aromatic hydrocarbon ring group having 5 to 12 carbon atoms. Specific examples of these groups include the alkyl group having 1 to 20 carbon atoms, which may have a substituent, the alkenyl group having 2 to 20 carbon atoms, which may have a substituent, and the cycloalkyl group having 3 to 12 carbon atoms, which may have a substituent, for A^{y}, as well as among the aromatic hydrocarbon ring groups described for A^{x}, the same groups as the examples of the group having 5 to 12 carbon atoms.

In the group represented by -SO₂-R⁴ for A^{y}, R⁴ represents an alkyl group having 1 to 20 carbon atoms, an alkenyl group having 2 to 20 carbon atoms, a phenyl group, or a 4-methylphenyl group. Specific examples of the alkyl group having 1 to 20 carbon atoms and the alkenyl group having 2 to 20 carbon atoms, for R⁴, include the same groups as the examples of the alkyl group having 1 to 20 carbon atoms and the alkenyl group having 2 to 20 carbon atoms for A^{y}.

In the group represented by -C(=S)NH-R⁹ for A^{y}, R⁹ represents an alkyl group having 1 to 20 carbon atoms, which may have a substituent, an alkenyl group having 2 to 20 carbon atoms, which may have a substituent, a cycloalkyl group having 3 to 12 carbon atoms, which may have a substituent, or an aromatic group having 5 to 20 carbon atoms, which may have a substituent. Specific examples of these groups include the alkyl group having 1 to 20 carbon atoms, which may have a substituent, the alkenyl group having 2 to 20 carbon atoms, which may have a substituent, and the cycloalkyl group having 3 to 12 carbon atoms, which may have a substituent, for A^{y}, as well as among the aromatic groups such as aromatic hydrocarbon ring groups and aromatic heterocycles, described for A^{x}, the same groups as the examples of the group having 5 to 20 carbon atoms.

Examples of the organic group having 2 to 30 carbon atoms, which contains at least one aromatic ring selected from the group consisting of aromatic hydrocarbon rings and aromatic heterocycles, for A^{y}, include the same groups as described for A^{x}.

Among these examples, A^{y} is preferably represented by a hydrogen atom, an alkyl group having 1 to 20 carbon atoms, which may have a substituent, an alkenyl group having 2 to 20 carbon atoms, which may have a substituent, a cycloalkyl group having 3 to 12 carbon atoms, which may have a substituent, an alkynyl group having 2 to 20 carbon atoms, which may have a substituent, -C(=O)-R³, -SO₂-R⁴, or an organic group having 2 to 30 carbon atoms, which contains at least one aromatic ring selected from the group consisting of aromatic hydrocarbon rings and aromatic heterocycles. Furthermore, A^{y} is further preferably a hydrogen atom, an alkyl group having 1 to 20 carbon atoms, which may have a substituent, an alkenyl group having 2 to 20 carbon atoms, which may have a substituent, a cycloalkyl group having 3 to 12 carbon atoms, which may be a substituent, an alkynyl group having 2 to 20 carbon atoms, which may have a substituent, an aromatic hydrocarbon ring group having 6 to 12 carbon atoms, which may have a substituent, an aromatic heterocyclic group having 3 to 9 carbon atoms, which may have a substituent, a group having 3 to 9 carbon atoms, which may have a substituent and contains a combination of an aromatic hydrocarbon ring and a heterocycle, or a group represented by -C(=O)-R³ or -SO₂-R⁴. R³ and R⁴ herein represent the same meanings as described above.

The substituent of the alkyl group having 1 to 20 carbon atoms, which may have a substituent, the alkenyl group having 2 to 20 carbon atoms, which may have a substituent, and the alkynyl group having 2 to 20 carbon atoms, which may have a substituent, for A^{y}, is preferably a halogen atom, a cyano group, an alkoxy group having 1 to 20 carbon atoms, an alkoxy group having 1 to 12 carbon atoms, substituted with an alkoxy group having 1 to 12 carbon atoms, a phenyl group, a cyclohexyl group, a cyclic ether group having 2 to 12 carbon atoms, an aryloxy group having 6 to 14 carbon atoms, a hydroxyl group, a benzodioxanyl group, a phenylsulfonyl group, a 4-methylphenylsulfonyl group, a benzoyl group, or -SR¹⁰. R¹⁰ herein represents the same meaning as described above.

The substituent of the cycloalkyl group having 3 to 12 carbon atoms, which may have a substituent, the aromatic hydrocarbon ring group having 6 to 12 carbon atoms, which may have a substituent, the aromatic heterocyclic group having 3 to 9 carbon atoms, which may have a substituent, and the group having 3 to 9 carbon atoms, which may have a substituent and contains a combination of an aromatic hydrocarbon ring and a heterocycle, for A^{y}, is preferably a fluorine atom, an alkyl group having 1 to 6 carbon atoms, an alkoxy group having 1 to 6 carbon atoms, or a cyano group.

In addition, A^{x} and A^{y} may together form a ring. Examples of the ring include an unsaturated heterocycle having 4 to 30 carbon atoms and an unsaturated carbocycle having 6 to 30 carbon atoms, which may have a substituent.

The unsaturated heterocycle having 4 to 30 carbon atoms and the unsaturated carbocycle having 6 to 30 carbon atoms are not particularly limited, and may or may not have aromaticity.

Examples of the ring formed together by A^{x} and A^{y} include the rings shown below. It is to be noted that the rings shown below correspond to moieties represented as: 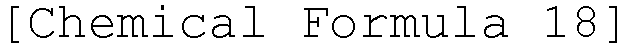 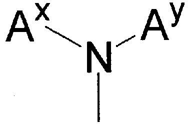 in formula (I). 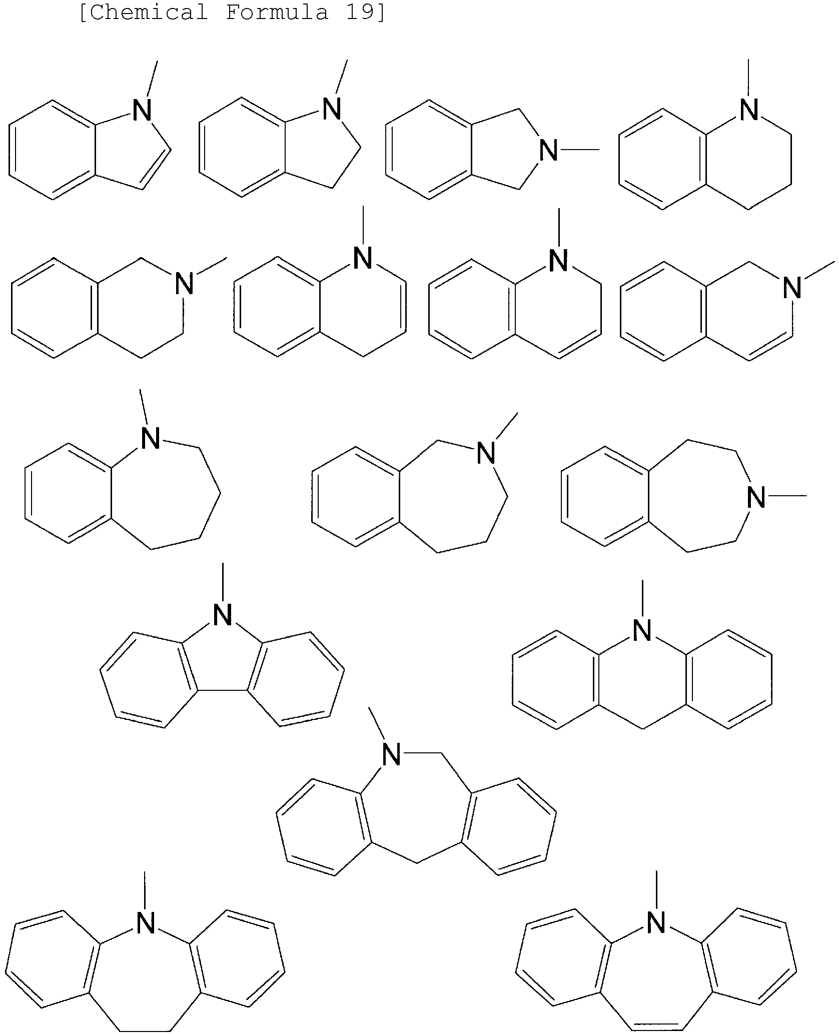 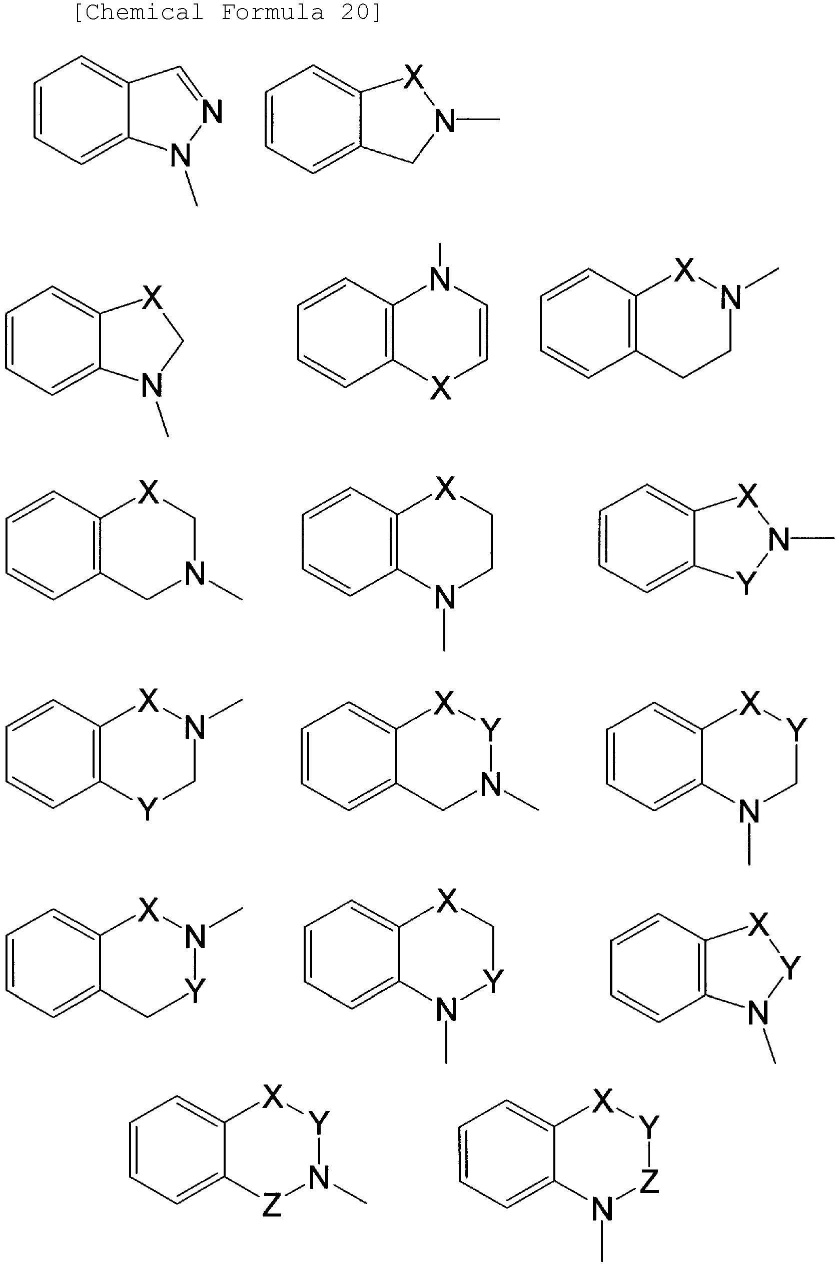 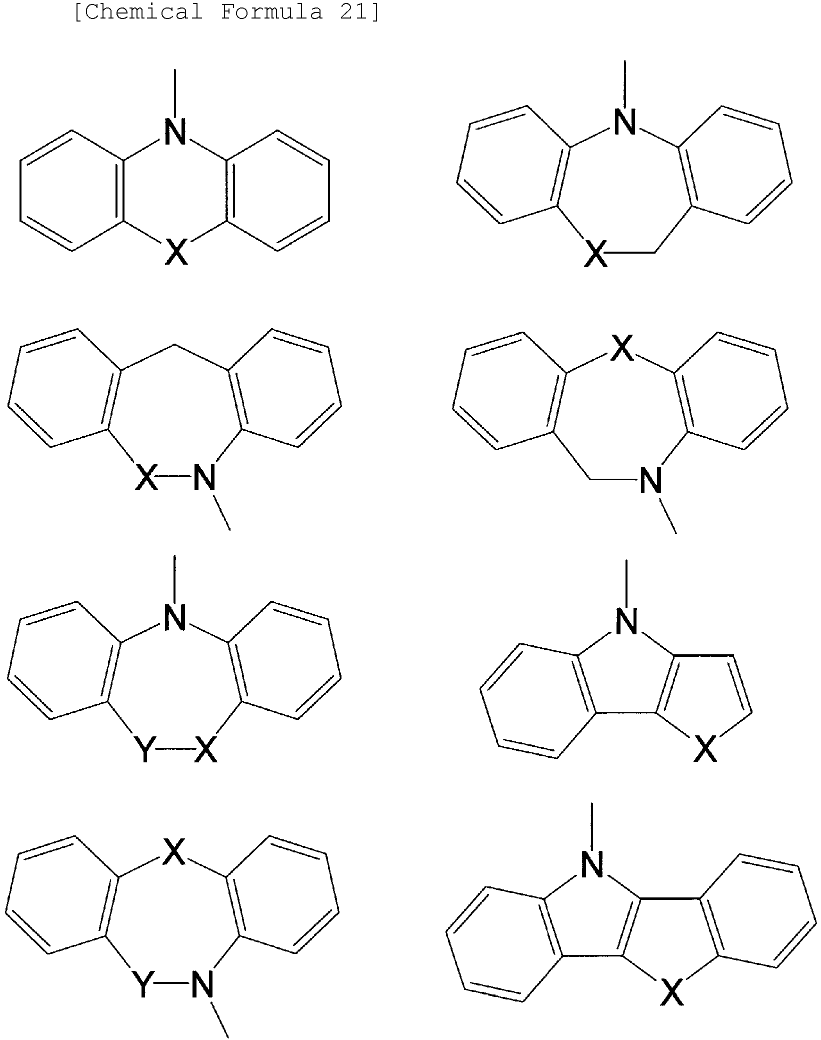 (in the formulas, X, Y, and Z represent the same meanings as described above)

In addition, these rings may have a substituent. Examples of the substituent include the same substituents as described as the substituent of the aromatic ring of A^{x}.

The total number of π electrons contained in A^{x} and A^{y} is, from the viewpoint of producing the desired advantageous effect of the present disclosure in a more favorable manner, preferably 4 or more and 24 or less, more preferably 6 or more and 20 or less, and even more preferably 6 or more and 18 or less.

Examples of a preferred combination of A^{x} and A^{y} include the following combination (α) and combination (β).

(α) A combination of: A^{x} that is an aromatic hydrocarbon ring group, an aromatic heterocyclic group, or a group containing a combination of an aromatic hydrocarbon ring and a heterocycle, having 4 to 30 carbon atoms; and A^{y} that is any of a hydrogen atom, a cycloalkyl group having 3 to 8 carbon atoms, an aromatic hydrocarbon ring group having 6 to 12 carbon atoms, which may have (a halogen atom, a cyano group, an alkyl group having 1 to 6 carbon atoms, an alkoxy group having 1 to 6 carbon atoms, or a cycloalkyl group having 3 to 8 carbon atoms) as a substituent, an aromatic heterocyclic group having 3 to 9 carbon atoms, which may have (a halogen atom, an alkyl group having 1 to 6 carbon atoms, an alkoxy group having 1 to 6 carbon atoms, or a cyano group) as a substituent, a group having 3 to 9 carbon atoms, which may have (a halogen atom, an alkyl group having 1 to 6 carbon atoms, an alkoxy group having 1 to 6 carbon atoms, or a cyano group) as a substituent, and contains a combination of an aromatic hydrocarbon ring and a heterocycle, an alkyl group having 1 to 20 carbon atoms, which may have a substituent, an alkenyl group having 1 to 20 carbon atoms, which may have a substituent, or an alkynyl group having 2 to 20 carbon atoms, which may have a substituent, where the substituent is any of a halogen atom, a cyano group, an alkoxy group having 1 to 20 carbon atoms, an alkoxy group having 1 to 12 carbon atoms, substituted with an alkoxy group having 1 to 12 carbon atoms, a phenyl group, a cyclohexyl group, a cyclic ether group having 2 to 12 carbon atoms, an aryloxy group having 6 to 14 carbon atoms, a hydroxyl group, a benzodioxanyl group, a benzenesulfonyl group, a benzoyl group, and -SR¹⁰.

(β) A combination of A^{x} and A^{y} that together form an unsaturated heterocycle or an unsaturated carbocycle.

R¹⁰ herein represents the same meaning as described above.

Examples of a more preferred combination of A^{x} and A^{y} include the following combination (γ).

(γ) A combination of: Ax that is any of groups that contain the following structure; and A^{y} that is any of a hydrogen atom, a cycloalkyl group of 3 to 8 carbon atoms, an aromatic hydrocarbon ring group having 6 to 12 carbon atoms, which may have (a halogen atom, a cyano group, an alkyl group having 1 to 6 carbon atoms, an alkoxy group having 1 to 6 carbon atoms, or a cycloalkyl group having 3 to 8 carbon atoms) as a substituent, an aromatic heterocyclic group having 3 to 9 carbon atoms, which may have (a halogen atom, an alkyl group having 1 to 6 carbon atoms, an alkoxy group having 1 to 6 carbon atoms, or a cyano group) as a substituent, a group having 3 to 9 carbon atoms, which may have (a halogen atom, an alkyl group having 1 to 6 carbon atoms, an alkoxy group having 1 to 6 carbon atoms, or a cyano group) as a substituent, and contains a combination of an aromatic hydrocarbon ring and a heterocycle, an alkyl group having 1 to 20 carbon atoms, which may have a substituent, an alkenyl group having 1 to 20 carbon atoms, which may have a substituent, or an alkynyl group having 2 to 20 carbon atoms, which may have a substituent, where the substituent is any of a halogen atom, a cyano group, an alkoxy group having 1 to 20 carbon atoms, an alkoxy group having 1 to 12 carbon atoms, substituted with an alkoxy group having 1 to 12 carbon atoms, a phenyl group, a cyclohexyl group, a cyclic ether group having 2 to 12 carbon atoms, an aryloxy group having 6 to 14 carbon atoms, a hydroxyl group, a benzodioxanyl group, a benzenesulfonyl group, a benzoyl group, and -SR¹⁰.

R¹⁰ herein represents the same meaning as described above. 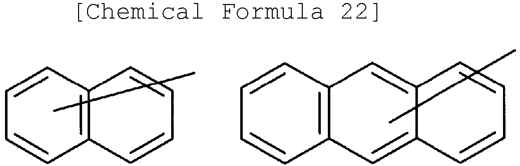 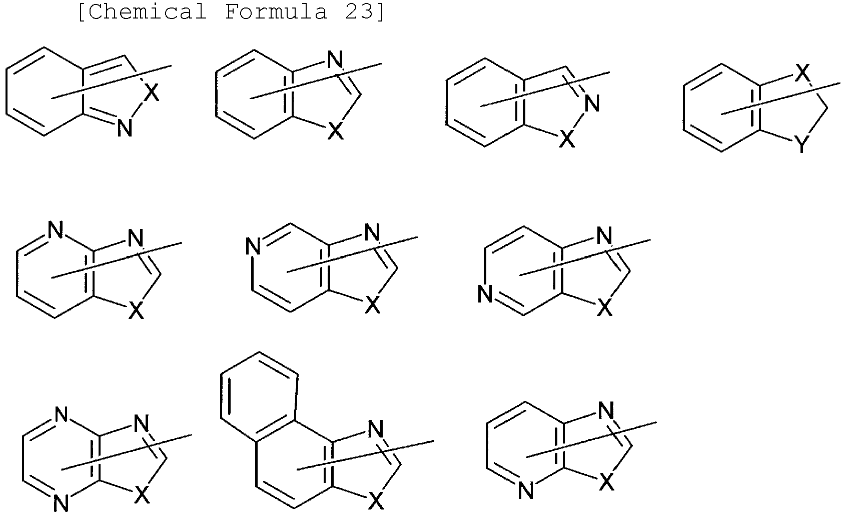 (in the formula, X and Y represent the same meanings as described above)

Examples of a particularly preferred combination of A^{x} and A^{y} include the following combination (δ).

(δ) A combination of: A^{x} that is any of groups that contain the following structure; and A^{y} that is any of a hydrogen atom, a cycloalkyl group of 3 to 8 carbon atoms, an aromatic hydrocarbon ring group having 6 to 12 carbon atoms, which may have (a halogen atom, a cyano group, an alkyl group having 1 to 6 carbon atoms, an alkoxy group having 1 to 6 carbon atoms, or a cycloalkyl group having 3 to 8 carbon atoms) as a substituent, an aromatic heterocyclic group having 3 to 9 carbon atoms, which may have (a halogen atom, an alkyl group having 1 to 6 carbon atoms, an alkoxy group having 1 to 6 carbon atoms, or a cyano group) as a substituent, a group having 3 to 9 carbon atoms, which may have (a halogen atom, an alkyl group having 1 to 6 carbon atoms, an alkoxy group having 1 to 6 carbon atoms, or a cyano group) as a substituent, and contains a combination of an aromatic hydrocarbon ring and a heterocycle, an alkyl group having 1 to 20 carbon atoms, which may have a substituent, an alkenyl group having 1 to 20 carbon atoms, which may have a substituent, or an alkynyl group having 2 to 20 carbon atoms, which may have a substituent, where the substituent is any of a halogen atom, a cyano group, an alkoxy group having 1 to 20 carbon atoms, an alkoxy group having 1 to 12 carbon atoms, substituted with an alkoxy group having 1 to 12 carbon atoms, a phenyl group, a cyclohexyl group, a cyclic ether group having 2 to 12 carbon atoms, an aryloxy group having 6 to 14 carbon atoms, a hydroxyl group, a benzodioxanyl group, a benzenesulfonyl group, a benzoyl group, and -SR¹⁰.

In the following formulas, X represents the same meaning as described above. R¹⁰ herein represents the same meaning as described above.

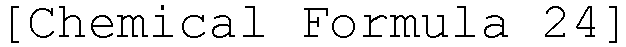

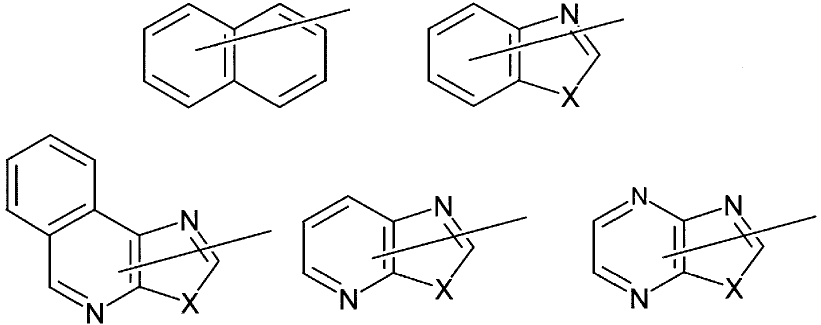

In formula (I), A¹ represents a trivalent aromatic group which may have a substituent. The trivalent aromatic group may be a trivalent carbocyclic aromatic group or a trivalent heterocyclic aromatic group. From the viewpoint of producing the desired advantageous effect of the present disclosure in a more favorable manner, a trivalent carbocyclic aromatic group is preferred, a trivalent benzene ring group or a trivalent naphthalene ring group is more preferred, and a trivalent benzene ring group or a trivalent naphthalene ring group represented by the following formula is further preferred. It is to be noted that in the following formulas, in order to make the bonding states clearer, the substituents Y¹ and Y² are shown for the sake of convenience (Y¹ and Y² represent the same meanings as described above. The same applies hereinafter.).

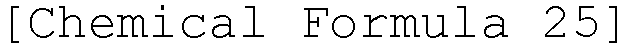

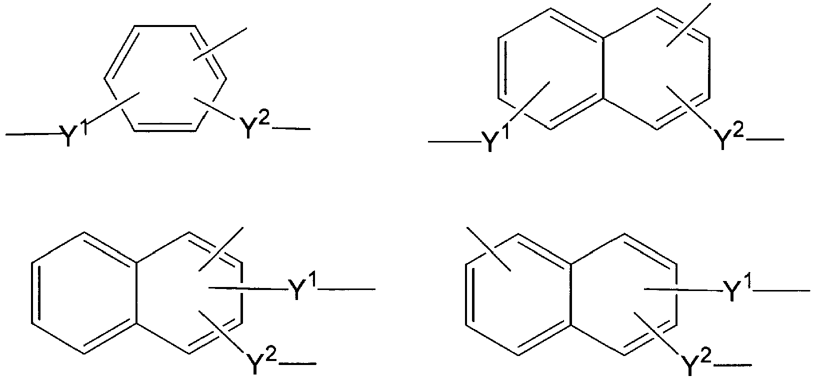

Among these groups, as A¹, the groups represented by formulas (A11) to (A25) shown below are more preferred, the groups represented by formulas (A11), (A13), (A15), (A19), and (A23) are further preferred, and the groups represented by formulas (A11) and (A23) are particularly preferred.

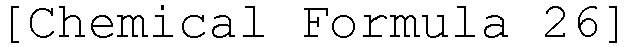

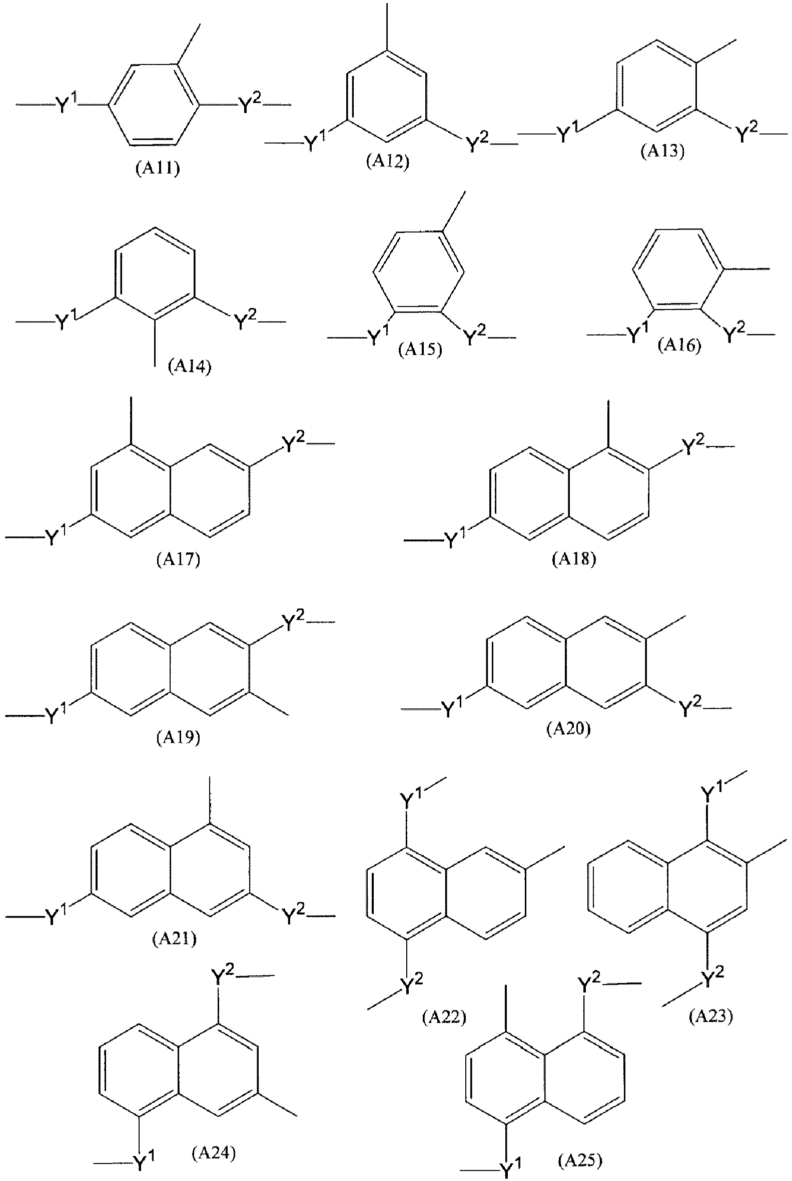

Examples of the substituent which the trivalent aromatic group may have, for A¹, include the same substituents as described as the substituent of the aromatic ring for A^{x}. A¹ preferably has no substituent.

In the formula (I), A² and A³ each independently represent a divalent alicyclic hydrocarbon group having 3 to 30 carbon atoms, which may have a substituent. Examples of the divalent alicyclic hydrocarbon group having 3 to 30 carbon atoms include a cycloalkanediyl group having 3 to 30 carbon atoms and a divalent alicyclic condensed ring group having 10 to 30 carbon atoms.

Examples of the cycloalkanediyl group having 3 to 30 carbon atoms include cyclopropanediyl groups; cyclobutanediyl groups such as cyclobutane-1,2-diyl and cyclobutane-1,3-diyl groups; cyclopentanediyl groups such as cyclopentane-1,2-diyl and cyclopentane-1,3-diyl groups; cyclohexanediyl groups such as cyclohexane-1,2-diyl, cyclohexane-1,3-diyl and cyclohexane-1,4-diyl groups; cycloheptanediyl groups such as cycloheptane-1,2-diyl, cycloheptane-1,3-diyl and cycloheptane-1,4-diyl groups; cyclooctanediyl groups such as cyclooctane-1,2-diyl, cyclooctane-1,3-diyl, cyclooctane-1,4-diyl and cyclooctane-1,5-diyl groups; cyclodecanediyl groups such as cyclodecane-1,2-diyl, cyclodecane-1,3-diyl, cyclodecane-1,4-diyl and cyclodecane-1,5-diyl groups; cyclododecanediyl groups such as cyclododecane-1,2-diyl, cyclododecane-1,3-diyl, cyclododecane-1,4-diyl and cyclododecane-1,5-diyl groups; cyclotetradecanediyl groups such as cyclotetradecane-1,2-diyl, cyclotetradecane-1,3-diyl, cyclotetradecane-1,4-diyl, cyclotetradecane-1,5-diyl and cyclotetradecane-1,7-diyl groups; and cycloeicosanediyl groups such as cycloeicosane-1,2-diyl and cycloeicosane-1,10-diyl groups.

Examples of the divalent alicyclic condensed ring group having 10 to 30 carbon atoms include decalindiyl groups such as decalin-2,5-diyl and decalin-2,7-diyl groups; adamantanediyl groups such as adamantane-1,2-diyl and adamantane-1,3-diyl groups; and
bicyclo[2.2.1]heptanediyl groups such as bicyclo[2.2.1]heptane-2,3-diyl, bicyclo [2.2.1]heptane-2,5-diyl and bicyclo [2.2.1]heptane-2,6-diyl groups.

These divalent alicyclic hydrocarbon groups may have a substituent at any position. Examples of the substituent include the same substituents as described as the substituent of the aromatic ring for A^{x}.

Among these groups, as A² and A³, divalent alicyclic hydrocarbon groups having 3 to 12 carbon atoms are preferred, cycloalkanediyl groups having 3 to 12 carbon atoms are more preferred, the groups represented by the following formulas (A31) to (A34) are further preferred, and the group represented by the following formula (A32) is particularly preferred.

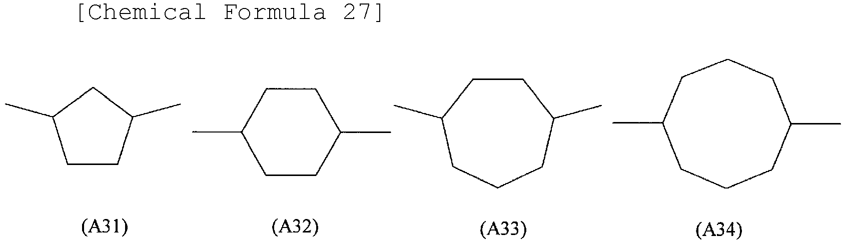

For the divalent alicyclic hydrocarbon group having 3 to 30 carbon atoms, there can be cis- and trans-stereoisomers based on the difference in the configuration of carbon atoms bonded to Y¹ and Y³ (or Y² and Y⁴). For example, in the case of a cyclohexane-1,4-diyl group, as shown below, there can be a cis isomer (A32a) and a trans isomer (A32b).

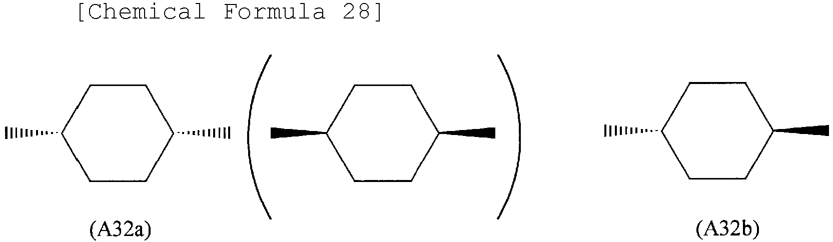

The divalent alicyclic hydrocarbon group having 3 to 30 carbon atoms may be a cis isomer, a trans isomer, or a mixture of cis and trans isomers. Above all, because of the favorable orientation, the trans isomer or the cis isomer is preferred, and the trans isomer is more preferred.

In the formula (I), A⁴ and A⁵ each independently represent a divalent aromatic group having 6 to 30 carbon atoms, which may have a substituent. The aromatic groups of A⁴ and A⁵ may be monocyclic or polycyclic. Preferred specific example of A⁴ and A⁵ include the following:

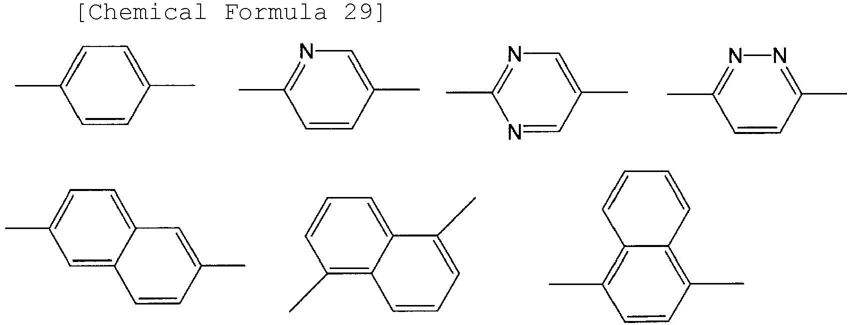

The divalent aromatic groups of A⁴ and A⁵ may have a substituent at any position. Examples of the substituent include a halogen atom, a cyano group, a hydroxyl group, alkyl groups having 1 to 6 carbon atoms, alkoxy groups having 1 to 6 carbon atoms, a nitro group, and -C(=O)-OR^{8b} groups. R^{8b} herein refers to an alkyl group having 1 to 6 carbon atoms. Among the groups, as the substituent, a halogen atom, alkyl groups having 1 to 6 carbon atoms, and alkoxy groups are preferred. A fluorine atom is more preferred as the halogen atom, a methyl group, an ethyl group, and a propyl group are more preferred as the alkyl group having 1 to 6 carbon atoms, and a methoxy group and an ethoxy group are more preferred as an alkoxy group.

Among these groups, from the viewpoint of producing the desired advantageous effect of the present disclosure in a more favorable manner, more preferably, A⁴ and A⁵ each independently represent a group represented by the following formula (A41), (A42), or (A43), which may have a substituent, and particularly preferably, the group represented by the formula (A41), which may have a substituent .

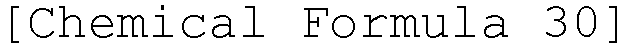

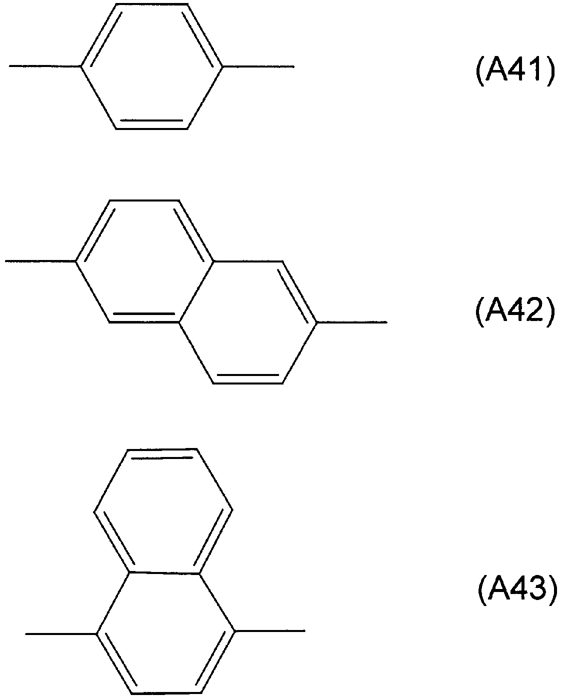

In the formula (I), Q¹ represents a hydrogen atom, or an alkyl group having 1 to 6 carbon atoms, which may have a substituent. Examples of the alkyl group having 1 to 6 carbon atoms, which may have a substituent, include the alkyl groups having 1 to 6 carbon atoms, among the alkyl groups having 1 to 20 carbon atoms, which may have a substituent, as described for Ay. Among these groups, Q¹ preferably represents a hydrogen atom and an alkyl group having 1 to 6 carbon atoms, and more preferably, a hydrogen atom and a methyl group.

In the formula (I), each m independently represents 0 or 1. Above all, m is preferably 1.

The compound (i) can be produced, for example, by the reaction between a hydrazine compound and a carbonyl compound, as described in International Publication No. WO2012/147904.

### (2) Polymerization Initiator

The cholesteric liquid crystal composition may contain a polymerization initiator from the viewpoint of efficiently developing the polymerization reaction. As the polymerization initiator, a photopolymerization initiator and a thermal polymerization initiator may be used.

### A. Photopolymerization Initiator

As the photopolymerization initiator, an appropriate photopolymerization initiator may be selected and used depending on the type of the polymerizable group present in the polymerizable liquid crystal compound. For example, if the polymerizable group is radical polymerizable, a radical polymerization initiator may be used, if the polymerizable group is an anionic polymerizable group, an anionic polymerization initiator may be used, and if the polymerizable group is a cationic polymerizable group, a cationic polymerization initiator may be used

As the photopolymerization initiator, known compounds may be used which generate a radical or an acid by ultraviolet-light or visible light . Specifically, examples of the compounds include benzoin, benzyl methyl ketal, benzophenone, biacetyl, acetophenone, Michler's ketone, benzyl, benzyl isobutyl ether, tetramethylthiuram mono(di)sulfide, 2,2-azobisisobutyronitrile, 2,2-azobis-2,4-dimethylvaleronitrile, benzoyl peroxide, di-tert-butyl peroxide, 1-hydroxycyclohexyl phenyl ketone, 2-hydroxy-2-methyl-1-phenyl-propane-1-one, 1-(4-isopropylphenyl)-2-hydroxy-2-methylpropan-1-one, thioxanthone, 2-chlorothioxanthone, 2-methylthioxanthone, 2,4-diethylthioxanthone, methyl benzoyl formate, 2,2-diethoxyacetophenone, β-ionone, β-bromostyrene, diazoaminobenzene, α-amylcynnamic aldehyde, p-dimethylamino acetophenone, p-dimethylamino propiophenone, 2-chlorobenzophenone, pp'-dichlorobenzophenone, pp'-bisdiethylaminobenzophenone, benzoin ethyl ether, benzoin isopropyl ether, benzoin n-propyl ether, benzoin n-butyl ether, diphenyl sulfide, bis(2,6-methoxybenzoyl)-2,4,4-trimethyl-pentyl phosphine oxide, 2,4,6-trimethyl benzoyl diphenyl-phosphine oxide, bis(2,4,6-trimethylbenzoyl)-phenylphosphine oxide, 2-methyl-1[4-(methylthio)phenyl]-2-morpholinopropan-1-one, 2-benzyl-2-dimethylamino-1-(4-morpholinophenyl)-butanone-1, anthracene benzophenone, α-chloroantraquinone, diphenyl disulfide, hexachlorobutadiene, pentachlorobutadiene, octachlorobutene, 1-chloromethylnaphthalene, 1,2-octanedione, carbazole oxime compounds such as 1-[4-(phenylthio)-, 2-(o-benzoyl oxime)], and 1-[9-ethyl-6-(2-methylbenzoyl)-9H-carbazole-3-yl]ethanone 1-(o-acetyloxime), (4-methylphenyl) [4-(2-methylpropyl)phenyl]iodonium hexafluorophosphate, 3-methyl-2-butynyltetramethylsulfonium hexafluoroantimonate, and diphenyl-(p-phenylthiophenyl)sulfonium hexafluoroantimonate. Two or more kinds of compounds may be mixed depending on the desired physical properties, and if necessary, a known photosensitizer and a tertiary amine compound as a polymerization accelerator may be added to control the curability.

Specific examples of the photo radical polymerization initiator include trade name Irgacure 907, trade name Irgacure 184, trade name Irgacure 369, trade name Irgacure 651, and trade name Irgacure OXE02 manufactured by Chiba Specialty Chemicals Inc.

Examples of the anionic polymerization initiator include alkyllithium compounds; monolithium salts or monosodium salts of biphenyl, naphthalene, pyrene, etc.; and polyfunctional initiators such as dilithium salts and trilithium salts.

Examples of the cationic polymerization initiator includes protonic acids such as sulfuric acid, phosphoric acid, perchloric acid, and trifluoromethanesulfonic acid; Lewis acids such as boron trifluoride, aluminum chloride, titanium tetrachloride, and tin tetrachloride; and an aromatic onium salt or a combination system of an aromatic onium salt and a reducing agent.

These polymerization initiators may be used alone, or two or more thereof may be used in combination.

In order to develop (co)polymerization of the polymerizable liquid crystal compound with other copolymerizable monomers which are used, if necessary, the cholesteric liquid crystal material may contain, if necessary, functional compounds such as an ultraviolet absorber, an infrared absorber, and an antioxidant.

The proportion of the photopolymerization initiator in the cholesteric liquid crystal material is typically 0.03 to 7 parts by mass with respect to 100 parts by mass of the cholesteric liquid crystal compound.

### B. Thermal Polymerization Initiator

In the case of using a thermal polymerization initiator, it is preferable to add the thermal polymerization initiator to the cholesteric liquid crystal mixture just before the polymerization step described later, in order to provide precise control of the polymerization reaction.

Examples of the thermal polymerization initiator include persulfates such as potassium persulfate and ammonium persulfate; azo compounds such as 4,4'-azobis(4-cyanovaleric acid), 2,2'-azobis[2-methyl-N-(2-hydroxyethyl)propionamide], 2,2'-azobis(2-amidinopropane)dihydrochloride, 2,2'-azobis(2,4-dimethylvaleronitrile), and 2,2'-azobisisobutyronitrile; and peroxides such as di-t-butyl peroxide, dicumyl peroxide, lauroyl peroxide, benzoyl peroxide, t-butylperoxy-2-ethylhexanoate, t-hexylperoxy-2-ethylhexanoate, t-butylperoxypivalate, di-isopropylperoxydicarbonate, di-t-butylperoxyisophthalate, 1,1',3,3'-tetramethylbutylperoxy-2-ethylhexanoate, t-butyl peroxyisobutyrate, and t-butylperoxy-2-ethylbutanoate. Redox initiators may be also used in which these thermal polymerization initiators are combined with a reducing agent.

Among these thermal polymerization initiators, typically, it is preferable to select the oil-soluble thermal polymerization initiator which is soluble in the cholesteric liquid crystal composition, and if necessary, a water-soluble thermal polymerization initiator may be also used in combination.

As the thermal polymerization initiator, an organic peroxide is preferred which has a molecular weight of 90 to 205 and a purity of 90% or more. The molecular weight of the thermal polymerization initiator is more preferably 170 to 200, still more preferably 175 to 195. The purity of the thermal polymerization initiator represents % by mass of the thermal polymerization initiator as a main component, which is preferably 92% or more, more preferably 95% or more.

The one-hour half-life temperature of the organic peroxide is preferably equal to or higher than the inherent coloring temperature of the composition in which the cholesteric liquid crystal compound has an ordered structure, and 95°C or lower. The half-life temperature, which is an index that indicates how the thermal polymerization initiator is likely to be cleaved, refers to a temperature at which the thermal polymerization initiator decomposes to 1/2 of the original initiator amount after a certain period of time, when the thermal polymerization initiator is kept under constant temperature. For example, the one-hour half-life temperature refers to a half-life temperature in a case where the constant time is one hour.

The use of the thermal polymerization initiator which has a preferred one-hour half-life temperature causes the obtained cholesteric liquid crystal resin fine particles to develop an inherent color of the liquid crystal compound, and makes it possible to reduce the amount of the unreacted cholesteric liquid crystal compound remaining in the fine particles, and the amounts of by-products such as an ether component, produced by the thermal polymerization initiation.

As the organic peroxide for the thermal polymerization initiators, because of the particularly high initiation efficiency and the amounts of residual monomers which may be reduced, peroxy esters are preferred, nonaromatic peroxy esters (that is, peroxy esters having no aromatic ring) are more preferred.

The thermal polymerization initiator is typically used in a proportion of 0.1 to 20 parts by mass, preferably 0.3 to 15 parts by mass, more preferably 0.5 to 10 parts by mass with respect to 100 parts by mass of the cholesteric liquid crystal compound.

The thermal polymerization initiator may be added in advance to the cholesteric liquid crystal composition, but in order to inhibit premature polymerization, may also be added after the completion of the step of forming droplets of the cholesteric liquid crystal composition, or directly to the suspension in the middle of the polymerization reaction.

### (3) Organic Solvent

The cholesteric liquid crystal composition may contain an organic solvent. The use of an organic solvent makes the viscosity of the cholesteric liquid crystal composition lower, thus improving the operability in the fine particle forming step and the particle diameter controllability. In the cholesteric liquid crystal composition, the cholesteric liquid crystal compound is preferably dissolved in an organic solvent.

Generic organic solvents may be used for the cholesteric liquid crystal composition, cyclopentanone, tetrahydrofuran (THF), methyl ethyl ketone (MEK), ethyl acetate, and mixtures thereof may be preferably used, and more preferably, cyclopentanone may be used.

### (4) Other Components of Cholesteric Liquid Crystal Composition

The cholesteric liquid crystal composition may contain a surfactant in order to adjust the surface tension. The surfactant is not particularly limited, but typically, nonionic surfactants are preferred. Commercially available products may be used as the nonionic surfactant. The commercially available products include nonionic surfactants which are oligomers that have a molecular weight of about several thousands, such as KH-40 manufactured by Seimi Chemical Co., Ltd., for example. In a case where the cholesteric liquid crystal composition contains a cholesteric liquid crystal compound and a surfactant, the proportion of the surfactant is typically 0.01 to 10 parts by mass, preferably 0.1 to 2 parts by mass with respect to 100 parts by mass of the cholesteric liquid crystal compound.

The cholesteric liquid crystal composition may contain, in addition to the components mentioned above, optional additives such as metals, metal complexes, dyes, pigments, fluorescent materials, phosphorescent materials, leveling agents, thixo agents, gelling agents, polysaccharides, ultraviolet absorbers, infrared absorbers, antioxidants, ion exchange resins, and metal oxides such as titanium oxide.

Here is a preparation example of the cholesteric liquid crystal composition. The cholesteric liquid crystal compound, the polymerization initiator, and the organic solvent are mixed, and stirred at a predetermined temperature to provide the cholesteric liquid crystal composition .

### 2. Inorganic Colloid Water Dispersion Preparation Step

According to the present disclosure, an inorganic colloid (a colloid of an inorganic compound) is used as a dispersant. In this specification, a dispersion with an inorganic colloid dispersed in an aqueous medium may be referred to as an "inorganic colloid water dispersion".

The inorganic colloid is stable even in the high-temperature region where the cholesteric liquid crystal compound develops a color, and can be easily removed in the step of removing the dispersant, as compared with organic dispersants.

The cholesteric liquid crystal compound is subjected to polymerization in an aqueous medium containing the inorganic colloid. As the aqueous medium, typically, water such as ion-exchange water is used, but if necessary, an organic solvent that is compatible with water, such as alcohols, may be used in combination.

As the inorganic colloid, it is preferable to use a colloid of a poorly water-soluble metal compound. The colloid of the poorly water-soluble metal compound can be suitably prepared by a method of reacting a polyvalent metal salt and a monovalent metal compound in an aqueous medium.

Examples of the polyvalent metal salt include halides, sulfates, nitrates, and acetates of magnesium, aluminum, calcium, manganese, iron, nickel, copper, and tin. More specifically, examples of the polyvalent metal salt include magnesium salts such as magnesium chloride, magnesium sulfate, magnesium nitrate, and magnesium acetate; aluminum salts such as aluminum chloride, aluminum sulfate, aluminum nitrate, and aluminum acetate; and calcium salts such as calcium chloride, calcium sulfate, calcium nitrate, and calcium acetate. These polyvalent metal salts may be used alone, or two or more thereof may be used in combination.

The monovalent metal compound is a salt or hydroxide of an anion selected from phosphate ion, hydrogen phosphate ion, carbonate ion, and hydroxide ion, and a monovalent metal. The monovalent metal for the monovalent metal compound preferably contains one or more monovalent metals selected from the group consisting of lithium, sodium, and potassium. Specifically, examples of the monovalent metal compound include hydroxides such as lithium hydroxide, sodium hydroxide, and potassium hydroxide; phosphates such as lithium phosphate, sodium phosphate, and potassium phosphate; and carbonates such as lithium carbonate, sodium carbonate, and potassium carbonate, and among these compounds, the hydroxides are preferred. The monovalent metal compounds may be used alone, or two or more thereof may be used in combination.

The colloid of the poorly water-soluble metal compound is not limited by the preparation method, but preferred are a colloid of a poorly water-soluble metal hydroxides and a colloid of a poorly water-soluble metal phosphate which are obtained by adjusting the pH of a aqueous solution of a water-soluble polyvalent metal compound to 7 or more, and more preferred are a colloid of a poorly water-soluble metal hydroxide produced by the reaction between a water-soluble polyvalent metal compound and an alkaline-earth metal hydroxide salt in an aqueous phase, and a colloid of a poorly water-soluble metal phosphate produced by the reaction between a water-soluble polyvalent metal compound and an alkaline-earth metal phosphate salt in an aqueous phase. As such a colloid, a magnesium hydroxide colloid and a calcium phosphate colloid are preferred.

The inorganic colloid is typically used in a proportion of 0.1 to 20 parts by mass with respect to 100 parts by mass of the cholesteric liquid crystal compound. When the proportion of the inorganic colloid is excessively low, it is difficult to achieve sufficient polymerization stability, thereby making polymerization aggregates likely to be produced. On the other hand, when the proportion of the inorganic colloid is excessively high, the viscosity of the aqueous solution is increased, thereby decreasing the polymerization stability. According to the present disclosure, if necessary, other inorganic colloids may be used in combination as needed.

In the number particle diameter distribution of the inorganic colloid, the D50 (50% cumulative value from a small particle diameter of the number particle diameter distribution) is 0.01 to 0.50 µm, and the D90 (90% cumulative value from a small particle diameter of the number particle diameter distribution) is preferably 0.10 to 1.50 µm. When the inorganic colloid has D50 and D90 within the ranges mentioned above, cholesteric liquid crystal resin fine particles are obtained which have a target particle diameter (a particle diameter in the range of 1 µm or more and 30 µm or less).

The number particle diameter distribution of the inorganic colloid can be measured with, for example, a particle diameter distribution measurement apparatus (manufactured by Shimadzu Corporation, product name: SALD particle diameter distribution measurement apparatus).

### 3. Fine Particle Forming Step

This step is a step of forming droplets containing the cholesteric liquid crystal compound into fine particles by shearing the cholesteric liquid crystal mixture containing the cholesteric liquid crystal compound, the inorganic colloid, and the aqueous medium by a disperser.

In this step, the cholesteric liquid crystal composition described above is preferably dispersed in the inorganic colloid water dispersion to prepare a cholesteric liquid crystal mixture, and sheared with the disperser to form uniform droplets of the cholesteric liquid crystal composition (primary droplets on the order of 50 to 1,000 µm volume average particle diameter), and then further sheared until the droplets become droplets with small particle diameters (secondary droplets on the order of 1 to 30 µm volume average particle diameter) close to the target cholesteric liquid crystal resin fine particles.

The volume average particle diameter and particle diameter distribution of minute droplets of the cholesteric liquid crystal composition affect the volume average particle diameter and particle diameter distribution of the target cholesteric liquid crystal resin fine particles. As long as the particle diameters of the droplets are not excessively large, the cholesteric liquid crystal resin fine particles to be produced are also less likely to be excessively increased in size, and there is also a reduced possibility that problems will occur in printing processes particularly in use for printing inks. As long as the particle diameters of the droplets are not excessively small, the cholesteric liquid crystal resin fine particles to be produced are also less likely to be excessively decreased in size, and there is also a reduced possibility that insufficient color development is achieved. As long as the particle diameter distribution of the droplets is not excessively broad, there is a possibility that the both advantages can be achieved in a case where the droplets have appropriate particle diameters. The droplets of the cholesteric liquid crystal composition are desirably formed to have approximately the same size as the cholesteric liquid crystal resin fine particles to be produced.

The volume average particle diameter of the droplets of the cholesteric liquid crystal composition may fall within the range of 1 µm or more and 30 µm or less, and preferably falls within the range of 2 µm or more and 20 µm or less, more preferably within the range of 3 µm or more and 15 µm or less, and further preferably within the range of 4 µm or more and 9 µm or less. In particular, in the case of using the obtained cholesteric liquid crystal resin fine particles for printing inks, the volume average particle diameter of the droplets is made as small as possible, thereby making it possible to obtain printed matters without unevenness in density, without causing problems in the printing processes.

The particle diameter distribution (volume average particle diameter/number average particle diameter) of the droplets of the cholesteric liquid crystal composition is typically 1 to 3, preferably 1 to 2.5, and more preferably 1 to 2. In particular, in the case of forming fine droplets, a method is preferred in which the cholesteric liquid crystal composition is circulated in the gap between a rotor that rotates at high speed and a stator that surrounds the rotor and has small holes or comb teeth.

The disperser that may be used in the present disclosure is not particularly limited, as long as the disperser may apply a constant shear force to the cholesteric liquid crystal mixture. As the disperser, for example, a high-speed shear mixer (manufactured by Eurotec Ltd., product name: Cavitron) may be used.

In the case of using the high-speed shear mixer, the shearing conditions are preferably 10 seconds to 1 hour under the condition of 1,000 to 50,000 revolutions.

The mass of the cholesteric liquid crystal compound is, based on 100 parts by mass of the total mass of the inorganic colloid and the aqueous medium (that is, the mass of the inorganic colloid water dispersion), preferably 5 parts by mass or more and 60 parts by mass or less, more preferably 15 parts by mass or more and 55 parts by mass or less, and further preferably 25 parts by mass or more and 50 parts by mass or less.

As long as the mass of the cholesteric liquid crystal compound is 5 parts by mass or more, there is a possibility that a sufficient amount of cholesteric resin fine particles may be obtained. On the other hand, as long as the mass of the cholesteric liquid crystal compound is 60 parts by mass or less, there is a possibility that the cholesteric liquid crystal compound may be sufficiently dispersed in the cholesteric liquid crystal mixture.

### 4. Stripping Step

After the fine particle forming step mentioned above and before the polymerization step described later, the method further includes a stripping step of removing the organic solvent from the cholesteric liquid crystal mixture by a stripping treatment.

The organic solvent which is not required for the polymerization reaction is removed by carrying out the stripping treatment, thereby making it possible to prevent the aggregation of the cholesteric liquid crystal resin fine particles, as shown by the comparison between Examples 1 to 2 and Comparative Example 2 described later.

The stripping treatment is carried out by a method of heating the cholesteric liquid crystal mixture and blowing an inert gas (e.g., nitrogen, argon, helium), or a method of blowing steam. Alternatively, a method may be employed in which stripping is carried out under reduced pressure while blowing the foregoing gas.

The temperature of the cholesteric liquid crystal mixture in the stripping treatment is typically 75°C to 100°C, more preferably 80°C to 98°C or less, further preferably 90°C to 97°C.

In the case of stripping under reduced pressure, the pressure of the gas phase is preferably controlled within the range of 5 to 70 kPa, more preferably 10 to 65 kPa, particularly preferably 20 to 60 kPa.

The stripping treatment time varies depending on the scale of the processing apparatus, the amount of throughput, the specific treatment method, the desired level of the total volatile organic component content, but is typically for 1 to 50 hours, preferably 2 to 40 hours, more preferably 3 to 30 hours, further preferably 5 to 25 hours, particularly preferably 10 to 20 hours, thereby favorable results can be obtained.

The amount of the organic solvent remaining in the cholesteric liquid crystal mixture after the stripping step is preferably 10,000 ppm or less, more preferably 1,000 ppm or less, and further preferably 100 ppm or less. As long as the amount of the residual organic solvent is 10,000 ppm or less, the aggregation of the cholesteric liquid crystal resin fine particles can be prevented.

Examples of the method for measuring the amount of the organic solvent remaining in the cholesteric liquid crystal mixture include a common method for quantifying a compound with the use of GC-MS, for example.

### 5. Polymerization Step

The method preferably further includes a polymerization step of producing the cholesteric liquid crystal resin by, after the fine particle forming step described above, increasing the temperature of the cholesteric liquid crystal mixture to the coloring temperature range of the cholesteric liquid crystal compound and subjecting the cholesteric liquid crystal mixture to at least one polymerization process selected from the group consisting of photopolymerization and thermal polymerization. The polymerization step is preferably carried out after the stripping step described above.

This polymerization step fixes the liquid crystal structure of the cholesteric liquid crystal compound, thereby making it possible to the obtained cholesteric liquid crystal resin fine particles to develop an inherent color of the liquid crystal compound.

In order to obtain the inherent color development of the liquid crystal, it is preferable to raise the temperature of the cholesteric liquid crystal mixture to the coloring temperature range of the cholesteric liquid crystal compound, just before the polymerization step. Raising the temperature in this manner can enhance the orientation of the cholesteric liquid crystal mixture, and the cholesteric liquid crystal mixture with the oriented liquid crystal structure maintained can be thus subjected directly to polymerization.

Here is a case of polymerization by photopolymerization reaction.

The photopolymerization reaction is carried out by ultraviolet irradiation to a suspension containing droplets with fine particle diameters, formed through the fine particle forming step. The ultraviolet light source is not particularly limited, and sources such as a mercury lamp may be used. The irradiation output, irradiation distance, and irradiation time depend on the reaction scale. For example, the irradiation output may be adjusted to 100 to 3,000 W, the irradiation distance from the suspension surface to the ultraviolet light source may be adjusted to 10 to 100 cm, and the irradiation time may be adjusted to 10 seconds to 1 hour.

Here is a case of polymerization by thermal polymerization reaction.

A suspension containing droplets with fine particle diameters, formed through the fine particle forming step, is put into a polymerization reactor, and subjected to polymerization typically at a temperature of 60 to 100°C, preferably 80 to 95°C. When the polymerization temperature is excessively low, the inherent color development of the liquid crystal fails to be achieved.

The polymerization described above produces cholesteric liquid crystal resin fine particles in the cholesteric liquid crystal mixture.

### 6. Removing Step

The method may include, after the polymerization step described above, a removing step of removing the inorganic colloid derived from the inorganic colloid water dispersion, from the polymerization reaction mixture containing the cholesteric liquid crystal resin.

The term "polymerization reaction mixture" herein means the cholesteric liquid crystal mixture with the cholesteric liquid crystal resin produced through the above-mentioned polymerization step. Almost all of the "cholesteric liquid crystal resin" forms fine particles described later.

In this step, after the polymerization step, the inorganic colloid present on the surfaces of the cholesteric liquid crystal resin fine particles is dissolved and then removed.

The inorganic colloid plays a role in stabilizing the droplets by surrounding the droplets of the cholesteric liquid crystal composition in the cholesteric liquid crystal mixture. After the polymerization step, the inorganic colloid is on the surfaces of the cholesteric liquid crystal resin fine particles. If the inorganic colloid on the surfaces of the cholesteric liquid crystal resin fine particles is not removed, the residual inorganic colloid affects the absorption and reflection of light at the resin fine particles, thus weakening the color development of the resin fine particles. Moreover, in particular, in a case where the cholesteric liquid crystal resin fine particles are used for printing inks, the inorganic colloid causes the smoothness of the printing surface and the mechanical strength to be decreased. For the reasons described above, there is a need to remove the inorganic colloid on the surfaces of the cholesteric liquid crystal resin fine particles.

In a case where a colloid of a poorly water-soluble metal compound is used as the inorganic colloid, it is preferable to carry out acid washing in the removing step.

The colloid of the poorly water-soluble metal compound is dissolved by adjusting the pH to an acidic range with the addition of an acid to the polymerization reaction mixture containing the cholesteric liquid crystal resin fine particles. In general, in acid washing, the colloid is dissolved by adjusting the pH of the polymerization reaction mixture to 6.5 or less with the addition of an acid to the polymerization reaction mixture . The pH of the polymerization reaction mixture is preferably 4 to 6.5, more preferably 4.5 to 6.

As the acid which may be used, inorganic acids such as sulfuric acid, hydrochloric acid, and nitric acid, and organic acids such as acetic acid, citric acid, and oxalic acid may be used, but inorganic acids which can adjust the pH through the addition in small amounts are preferred, and among the inorganic acids, sulfuric acid is particularly preferred.

The acid washing is preferably carried out after cooling the polymerization reaction mixture to about 25°C. The acid washing may be carried out by stirring for about 5 to 30 minutes, after the acid is added to the polymerization reaction mixture to adjust the pH.

### 7. Other Steps

Typically, after the acid washing, the polymerization reaction mixture is filtered to separate the cholesteric liquid crystal resin fine particles. Then, ion exchange water is newly added to the cholesteric liquid crystal resin fine particles to disperse the fine particles again in the water (re-slurry step), and a washing operation such as filtration and dehydration is carried out again to refine the cholesteric liquid crystal resin fine particles.

The filtration and dehydration, and the re-slurry step may be repeated several times, if necessary, but two to three times are preferred in terms of efficiency. The washing with water may be carried out continuously by a method of spraying water on a wet cake of colored polymer particles with the use of a belt conveyor on which a filter cloth is disposed.

After the water washing, the cholesteric liquid crystal resin fine particles are separated by filtration, and then dried in accordance with a conventional method. The drying method may be natural drying, but the wet cake containing the cholesteric liquid crystal resin fine particles may be dried by introducing a hot gas with the use of, for example, a drier with a stirring tank and a rotor blade.

### 8. Cholesteric Liquid Crystal Resin Fine Particles

The cholesteric liquid crystal resin fine particles obtained according to the present disclosure are fine particles that have a volume average particle diameter within the range of 1 µm or more and 30 µm or less. As just described, with the relatively small volume average particle diameter, even in a case where the cholesteric liquid crystal resin fine particles are used particularly for gravure printing or letterpress printing, there is an advantage that problems are unlikely to be caused in the printing, without the fine particles accumulated in a member (e.g., blade) of the printing apparatus.

The volume average particle diameter of the cholesteric liquid crystal resin fine particles typically falls within the range of 1 µm or more and 30 µm or less, preferably within the range of 1 µm or more and 20 µm or less, more preferably within the range of 1 µm or more and 10 µm or less, and further preferably within the range of 1 µm or more 5 µm and less. As long as the volume average particle diameter of the cholesteric liquid crystal resin fine particles is 30 µm or less, there is a reduced possibility that problems will occur in the printing process particularly in use for printing inks. As long as the volume average particle diameter of the cholesteric liquid crystal resin fine particles is 1 µm or more, there is a possibility that sufficient color development may be achieved.

The measurement and calculation of the volume average particle diameter are carried out by measuring the particle diameters of 100 cholesteric liquid crystal resin fine particles through electron microscope observation, and taking the average of the particle diameters.

The particle diameter distribution (volume average particle diameter/number average particle diameter) of the cholesteric liquid crystal resin fine particles is typically 1 to 3, preferably 1 to 2.5, and more preferably 1 to 2.

The color development of the cholesteric liquid crystal resin fine particles varies depending on the type of, for example, the cholesteric liquid crystal compound employed.

In a method for confirming the color development, the cholesteric liquid crystal resin fine particles are irradiated with visible light against a background of black paper, and the color which is visually confirmable at the time is regarded as the color of the cholesteric liquid crystal resin fine particles.

Examples of the application of the cholesteric liquid crystal resin fine particles include various printing inks and anti-counterfeit printing toners.

In addition, cholesteric liquid crystal resin fine particles which have circular polarization can be also produced by adjusting the kind or combination of the cholesteric liquid crystal compound, and examples of the application of such fine particles include circular polarizing filters.

### Examples

The present disclosure will be more specifically described by way of examples and comparative examples, but the present disclosure is not to be considered limited to these examples. It is to be noted that the units of parts and % are based on mass, unless otherwise noted.

Here are the test method implemented in the present examples and the comparative examples.

### 1. Production of Liquid Crystal Resin Fine Particles Example 1

### (1) Cholesteric Liquid Crystal Composition Preparation Step

A cholesteric liquid crystal composition was prepared by mixing 450g of the compound (i) (the compound of the following formula (A)) and 22.5 g of a polymerizable chiral compound (manufactured by BASF Corp., trade name: LC756) as cholesteric liquid crystal compounds, 4.5 g of a photopolymerization initiator (manufactured by Chiba Specialty Chemicals Inc., trade name: Irgacure 184), and 450 g of cyclopentanone as an organic solvent and stirring the mixture at 60°C for 1 hour.

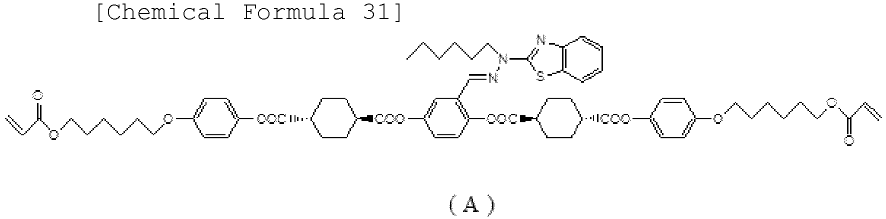

### (2) Inorganic Colloid Water Dispersion Preparation Step

While stirring an aqueous solution of 30 g magnesium chloride (water-soluble polyvalent metal salt) dissolved in 720g of ion exchange water at 25°C, an aqueous solution of 15 g sodium hydroxide (alkali metal hydroxide salt) dissolved in 135g of ion exchange water was gradually added to prepare a 900 g dispersion (inorganic colloidal water dispersion) of a magnesium hydroxide colloid (a poorly water-soluble metal hydroxide colloid).

When the particle diameter distribution of the obtained colloid was measured with a particle diameter distribution measurement apparatus (manufactured by Shimadzu Corporation, product name: SALD particle diameter distribution measurement apparatus), the D50 (50% cumulative value from a small particle diameter of the number particle diameter distribution) was 0.36 µm, and the D90 (90% cumulative value therefrom) was 0.80 µm.

### (3) Fine Particle Forming Step

To 900 g of the inorganic colloidal water dispersion, 909 g of the cholesteric liquid crystal composition was added at 60°C, and the mixture was stirred with a stirring apparatus equipped with a stirring blade. In this regard, coarse droplets were produced at the beginning of the stirring, and the stirring was carried out until the production of the coarse droplets was stabilized.

Furthermore, shearing was carried out at a rotation speed of 22,000 rpm for 1 minute with the use of a high-speed shear mixer (manufactured by Eurotec Ltd., product name: Cavitron) as a disperser to form droplets of the cholesteric liquid crystal compound, and then prepare a suspension of the cholesteric liquid crystal mixture. It was confirmed that the cholesteric liquid crystal compound was present as fine particles in each of the droplets produced.

### (4) Stripping Step

The cholesteric liquid crystal mixture was subjected to a stripping treatment of blowing nitrogen at 95°C for 12 hours, thereby removing organic solvent (cyclopentanone).

### (5) Polymerization Step

The cholesteric liquid crystal mixture with the organic solvent removed therefrom was subjected to ultraviolet irradiation for 3 minutes at an irradiation distance of 20 cm with the use of a high-pressure mercury lamp of 1,500 W, thereby developing photopolymerization.

As a result, the cholesteric liquid crystal compound in the cholesteric liquid crystal mixture was polymerized to form cholesteric liquid crystal resin fine particles. Hereinafter, the mixture containing the cholesteric liquid crystal resin fine particles is referred to as a "polymerization reaction mixture".

### (6) Removing Step and Post Treatment

Diluted sulfuric acid was added to the polymerization reaction mixture until the liquid property of the dispersion reached pH = 5, thereby dissolving the magnesium hydroxide colloid on the surfaces of the cholesteric liquid crystal resin fine particles, and washing was repeated with ion exchange water, thereby removing the magnesium hydroxide colloid. The obtained mixture was dehydrated and dried, thereby providing cholesteric liquid crystal resin fine particles (Example 1). The obtained cholesteric liquid crystal resin fine particles were 6 µm in volume average particle diameter, and green in color (greenish liquid crystal color).

### Example 2

Cholesteric liquid crystal resin fine particles were obtained in the same manner as in Example 1, except that the photopolymerization initiator was not added in the "(1) Cholesteric Liquid Crystal Composition Preparation Step" in Example 1, and that 9.0 g of a thermal polymerization initiator (manufactured by NOF Corporation, trade name: Perbutyl O) was added at 60°C, stirred for 1 hour, and then heated to 90°C for reaction for 1 hour in the "(5) Polymerization Step" (Example 2). The obtained cholesteric liquid crystal resin fine particles were 12 µm in volume average particle diameter, and green in color (greenish liquid crystal color).

### Comparative Example 1

Cholesteric liquid crystal resin fine particles were obtained in the same manner as in Example 1, except that droplets were formed only by stirring with a stirring blade in the "(3) Fine Particle Forming Step" in Example 1 (Comparative Example 1). The obtained cholesteric liquid crystal resin fine particles were 50 µm in volume average particle diameter, and green in color (greenish liquid crystal color).

### Comparative Example 2

Fine particles were obtained by carrying out the same steps as in Example 1, except that the "(4) Stripping Step" in Example 1 was not carried out (Comparative Example 2). Because the obtained fine particles were rapidly aggregated on removing the inorganic colloid, the volume average particle diameter was not measured. The obtained fine particles were white in color, without color development.

### Comparative Example 3

Fine particles were obtained by carrying out the same steps as in Example 1, except that the photopolymerization initiator was not added in the "(1) Cholesteric Liquid Crystal Composition Preparation Step" in Example 1, and the "(5) Polymerization Step" was not carried out (Comparative Example 3). The obtained fine particles were 8 µm in volume average particle diameter, and white in color, without color development.

### 2. Evaluation of Cholesteric Liquid Crystal Resin Fine Particles

The respective cholesteric liquid crystal resin fine particles according to Example 1 to Example 2 and Comparative Example 1 to Comparative Example 3 were subjected to particle diameter measurement and color development confirmation. The details are as follows.

### (1) Measurement of Particle Diameter

The particle diameters of 100 cholesteric liquid crystal resin fine particles were measured through electron microscope observation, and the range was determined.

### (2) Color Development Confirmation

The cholesteric liquid crystal resin fine particles were irradiated with visible light against a background of black paper, and the color which was visually confirmable at the time was regarded as the color of the cholesteric liquid crystal resin fine particles.

Table 1 below shows the measurement and evaluation results of the respective cholesteric liquid crystal resin fine particles according to Example 1 to Example 2 and Comparative Example 1 to Comparative Example 3. It is to be noted that as described above, the volume average particle diameter of the cholesteric liquid crystal resin fine particles according to Comparative Example 2 was not measured, because the fine particles were aggregated.

**[Table 1]**

| | Example 1 | Example 2 | Comparative Example 1 | Comparative Example 2 | Comparative Example 3 |
|---|---|---|---|---|---|
| Fine Particle Forming Method | shearing with disperser | shearing with disperser | common stirring method | shearing with disperser | shearing with disperser |
| Stripping Step | carried out | carried out | carried out | not carried out | carried out |
| Polymerizatio n Method | photopolymerizat ion method | thermal polymerization method | photopolymerizat ion method | photopolymerizat ion method (no polymerization reaction proceeded) | no polymerization |
| Volume Average Particle Diameter (µm) | 6 | 12 | 50 | - | 8 |
| Color Development | green | green | green | white | white |

### 3. Consideration

Hereinafter, the evaluation results of the cholesteric liquid crystal resin fine particles will be studied with reference to Table 1.

From Table 1, while the cholesteric liquid crystal resin fine particles according to Comparative Example 1 were green in color, the volume average particle diameter was 50 µm. Accordingly, it is found that in a case where the common stirring method is implemented in the fine particle forming step, the particle diameters of the fine particles are excessively increased.

From Table 1, the fine particles according to Comparative Example 2 provided a white color without giving a color, and caused aggregation. Accordingly, it is found that no photopolymerization reaction proceeds in a case where the ultraviolet irradiation are carried out without removing the organic solvent and then the post treatment are carried out. The reason is presumed to be that it is not possible to have the ordered structure, because of the presence of the organic solvent between the liquid crystal molecules. Accordingly, it has been demonstrated that such fine particles give no color as liquid crystals.

From Table 1, while the fine particles according to Comparative Example 3 were 8 µm in volume average particle diameter, the fine particles provided a white color without giving a color. Accordingly, it has been confirmed that the fine particles containing the cholesteric liquid crystal compound, subjected to no polymerization step, give no color as liquid crystals.

On the other hand, from Table 1, the cholesteric liquid crystal resin fine particles according to Example 1 and Example 2 were respectively 6 µm and 12 µm in volume average particle diameter, and both green in color.

Accordingly, it has been demonstrated that cholesteric liquid crystal resin fine particles that have a volume average particle diameter in the above-mentioned specific range are obtained by carrying out the fine particle forming step of forming the cholesteric liquid crystal compound into fine particles by shearing with a disperser with the use of the inorganic colloid as a dispersant. In particular, it has been demonstrated that the volume average particle diameter of the obtained cholesteric liquid crystal resin fine particles falls within the range of 1 µm to 30 µm, even with the use of any of the photopolymerization method (Example 1) and the thermal polymerization method (Example 2).

## Claims

1. A method for producing cholesteric liquid crystal resin fine particles,
wherein a volume average particle diameter of the cholesteric liquid crystal resin fine particles is in a range of 1 µm or more and 30 µm or less,
wherein the production method comprises a fine particle forming step of forming droplets comprising a cholesteric liquid crystal compound into fine particles by shearing a cholesteric liquid crystal mixture comprising a cholesteric liquid crystal composition comprising the cholesteric liquid crystal compound and an organic solvent, an inorganic colloid, and an aqueous medium by a disperser,
wherein the production method further comprises a polymerization step of producing the cholesteric liquid crystal resin fine particles by, after the fine particle forming step, increasing a temperature of the cholesteric liquid crystal mixture to a coloring temperature range of the cholesteric liquid crystal compound and subjecting the cholesteric liquid crystal mixture to at least one polymerization process selected from the group consisting of photopolymerization and thermal polymerization, and
wherein the production method further comprises a stripping step of removing, after the fine particle forming step and before the polymerization step, the organic solvent from the cholesteric liquid crystal mixture by a stripping treatment.

2. The production method according to Claim 1,
wherein a mass of the cholesteric liquid crystal compound is in a range of 5 parts by mass or more and 60 parts by mass or less, when a total mass of the inorganic colloid and the aqueous medium is determined as 100 parts by mass.

3. The production method according to Claim 1 or 2,
wherein the production method further comprises a removing step of removing, after the polymerization step, the inorganic colloid from a polymerization reaction mixture containing the cholesteric liquid crystal resin.

## Patentansprüche

1. Verfahren zur Herstellung feiner cholesterischer Flüssigkristallharzteilchen,
wobei der volumengemittelte Teilchendurchmesser der feinen cholesterischen Flüssigkristallharzteilchen in einem Bereich von 1 µm oder mehr und 30 µm oder weniger liegt,
wobei das Herstellungsverfahren einen Schritt zur Bildung feiner Teilchen umfasst, bei dem Tröpfchen, die eine cholesterische Flüssigkristallverbindung umfassen, durch Scheren einer cholesterischen Flüssigkristallmischung, die eine cholesterische Flüssigkristallzusammensetzung umfasst, die die cholesterische Flüssigkristallverbindung und ein organisches Lösungsmittel, ein anorganisches Kolloid und ein wässriges Medium umfasst, durch einen Dispergierer zu feinen Teilchen gebildet werden,
wobei das Herstellungsverfahren ferner einen Polymerisationsschritt zur Herstellung der feinen cholesterischen Flüssigkristallharzteilchen umfasst, indem nach dem Schritt der Bildung der feinen Teilchen die Temperatur der cholesterischen Flüssigkristallmischung auf einen Färbungstemperaturbereich der cholesterischen Flüssigkristallverbindung erhöht wird und die cholesterische Flüssigkristallmischung mindestens einem Polymerisationsprozess unterzogen wird, der aus der Gruppe ausgewählt wird, die aus Photopolymerisation und thermischer Polymerisation besteht, und
wobei das Herstellungsverfahren ferner einen Stripping-Schritt umfasst, bei dem nach dem Schritt der Bildung feiner Teilchen und vor dem Polymerisationsschritt das organische Lösungsmittel aus der cholesterischen Flüssigkristallmischung durch eine Stripping-Behandlung entfernt wird.

2. Herstellungsverfahren nach Anspruch 1,
wobei die Masse der cholesterischen Flüssigkristallverbindung in einem Bereich von 5 Massenteilen oder mehr und 60 Massenteilen oder weniger liegt, wenn die Gesamtmasse des anorganischen Kolloids und des wässrigen Mediums als 100 Massenteile bestimmt wird.

3. Herstellungsverfahren nach Anspruch 1 oder 2,
wobei das Herstellungsverfahren ferner einen Entfernungsschritt umfasst, bei dem nach dem Polymerisationsschritt das anorganische Kolloid aus einer Polymerisationsreaktionsmischung, die das cholesterische Flüssigkristallharz enthält, entfernt wird.

## Revendications

1. Méthode de production de fines particules de résine à cristaux liquides cholestériques,
dans laquelle le diamètre moyen en volume des fines particules de résine à cristaux liquides cholestériques est compris entre 1 um ou plus et 30 µm ou moins,
dans laquelle la méthode de production comprend une étape de formation de fines particules consistant à former des gouttelettes comprenant un composé de cristaux liquides cholestériques en fines particules en cisaillant un mélange de cristaux liquides cholestériques comprenant une composition de cristaux liquides cholestériques comprenant le composé de cristaux liquides cholestériques et un solvant organique, un colloïde inorganique et un milieu aqueux à l'aide d'un disperseur,
dans laquelle la méthode de production comprend en outre une étape de polymérisation consistant à produire de fines particules de résine à cristaux liquides cholestériques en augmentant, après l'étape de formation des fines particules, la température du mélange de cristaux liquides cholestériques jusqu'à une plage de températures de coloration du composé de cristaux liquides cholestériques et en soumettant le mélange de cristaux liquides cholestériques à au moins un processus de polymérisation choisi dans le groupe constitué de la photopolymérisation et de la polymérisation thermique, et
dans laquelle la méthode de production comprend en outre une étape de stripping consistant à éliminer, après l'étape de formation des fines particules et avant l'étape de polymérisation, le solvant organique du mélange de cristaux liquides cholestériques par un traitement de stripping.

2. Méthode de production selon la revendication 1,
dans laquelle la masse du composé à cristaux liquides cholestériques est comprise entre 5 parties en masse ou plus et 60 parties en masse ou moins, lorsque la masse totale du colloïde inorganique et du milieu aqueux est déterminée comme étant de 100 parties en masse.

3. Méthode de production selon la revendication 1 ou 2,
dans laquelle la méthode de production comprend en outre une étape d'élimination consistant à éliminer, après l'étape de polymérisation, le colloïde inorganique d'un mélange de réaction de polymérisation contenant la résine de cristaux liquides cholestériques.
